(19) Europäisches Patentamt
European Patent Office
Office européen des brevets

(11) **EP 3 969 293 B1**

(12) **FASCICULE DE BREVET EUROPEEN**

(45) Date de publication et mention
de la délivrance du brevet:
**28.06.2023 Bulletin 2023/26**

(21) Numéro de dépôt: **20728960.4**

(22) Date de dépôt: **11.05.2020**

(51) Classification Internationale des Brevets (IPC):
*B42D 25/324* (2014.01)    *B42D 25/351* (2014.01)
*B42D 25/373* (2014.01)    *B42D 25/328* (2014.01)
*G02B 5/18* (2006.01)    *G07D 7/1205* (2016.01)

(52) Classification Coopérative des Brevets (CPC):
**B42D 25/373; B42D 25/324; B42D 25/328;**
**B42D 25/351; G02B 5/1809; G07D 7/1205**

(86) Numéro de dépôt international:
**PCT/EP2020/063060**

(87) Numéro de publication internationale:
**WO 2020/229415 (19.11.2020 Gazette 2020/47)**

(54) **COMPOSANT OPTIQUE DE SÉCURITÉ À EFFET PLASMONIQUE, FABRICATION D'UN TEL COMPOSANT ET OBJET SÉCURISÉ ÉQUIPÉ D'UN TEL COMPOSANT**

OPTISCHE SICHERHEITSKOMPONENTE MIT PLASMONISCHEM EFFEKT, HERSTELLUNG EINER SOLCHEN KOMPONENTE UND SICHERES DOKUMENT MIT EINER SOLCHEN KOMPONENTE

OPTICAL SECURITY COMPONENT HAVING A PLASMONIC EFFECT, MANUFACTURE OF SUCH A COMPONENT, AND SECURE OBJECT PROVIDED WITH SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.05.2019 FR 1904947**

(43) Date de publication de la demande:
**23.03.2022 Bulletin 2022/12**

(73) Titulaire: **SURYS**
**77600 Bussy-Saint-Georges (FR)**

(72) Inventeurs:
• **ES-SAIDI, Soukaina**
**77600 Bussy Saint Georges (FR)**

• **BLAIZE, Sylvain**
**10000 Troyes (FR)**
• **MACIAS, Demetrio**
**10000 Troyes (FR)**
• **LE CUNFF, Loïc**
**77600 Bussy Saint Georges (FR)**

(74) Mandataire: **Osha Liang**
**2, rue de la Paix**
**75002 Paris (FR)**

(56) Documents cités:
**WO-A1-2014/049108    WO-A1-2019/072859**
**DE-A1-102007 061 979**

## Description

### Domaine technique de l'invention

La présente description concerne un composant optique de sécurité à résonance plasmonique et un procédé de fabrication d'un tel composant. Le composant optique de sécurité selon la présente description s'applique notamment au marquage de sécurité pour l'authentification d'objets de valeurs, et plus précisément l'authentification à l'oeil nu par observation en réflexion et/ou en transmission.

### Etat de la technique

On connaît de nombreuses technologies pour l'authentification d'objets de valeur et notamment l'authentification de documents de valeur, tels que les billets de banque ou documents de voyage (passeports, cartes d'identité ou autres documents d'identification), ou pour l'authentification de produits au moyen d'étiquettes de marquage. Ces technologies visent à la production de composants optiques de sécurité dont les effets optiques en fonction des paramètres d'observation (orientation par rapport à l'axe d'observation, position et dimensions de la source lumineuse, etc.) prennent des configurations caractéristiques et vérifiables. Le but général de ces composants optiques est de fournir des effets nouveaux et différenciés, à partir de configurations physiques difficilement reproductibles ou imitables par un faussaire.

Parmi ces composants, les composants optiques de sécurité dits « à résonance plasmonique » permettent de générer des effets colorés en réflexion ou en transmission, qui résultent de l'excitation de plasmons volumiques ou surfaciques lors de l'interaction d'ondes lumineuses incidentes avec des motifs métalliques nanométriques. Les couleurs ainsi produites, dites « structurelles », présentent l'avantage d'être variables en fonction de paramètres d'observation ce qui facilite l'authentification. Par ailleurs, contrairement aux composants optiques de sécurité basés sur des effets purement diffractifs, comme les composants holographiques par exemple, les composants optiques de sécurité à résonance plasmonique ont l'avantage de présenter des effets visuels à l'ordre zéro (réflexion spéculaire ou transmission directe), plus difficiles à reproduire du fait des très petites dimensions des structures mais faciles à authentifier.

La demande de brevet publiée EP 2 771 724 au nom de la déposante décrit ainsi un composant optique de sécurité destiné à être observé dans le visible, en réflexion directe, comprenant une couche en matériau diélectrique transparente et une couche métallique continue suffisamment épaisse, formant avec la couche en matériau diélectrique une interface métal - diélectrique. La couche métallique est structurée au niveau de l'interface pour former deux ensembles d'ondulations s'étendant selon deux directions et formant un réseau de couplage à deux dimensions, de périodes sub-longueur d'onde selon chacune des directions. Les périodes selon chaque direction sont déterminées pour optimiser le couplage d'une onde lumineuse incidente dans une bande spectrale donnée avec un mode plasmonique se propageant à l'interface métal - diélectrique. Les différents mécanismes physiques mis en oeuvre dans le composant optique de sécurité décrit dans la demande EP 2 771 724 permettent d'obtenir la formation d'un filtre en réflexion coupe bande, les radiations couplées étant absorbées dans la couche métallique. La déposante a ainsi montré l'obtention d'effets colorés caractéristiques jaune ou violet.

La demande de brevet EP 2 695 006 au nom de la déposante décrit également un composant optique de sécurité à résonance plasmonique, mais destiné à être observé en transmission. Dans le composant optique de sécurité ainsi décrit, la couche métallique est agencée entre deux couches en matériau diélectrique pour former deux interfaces diélectrique - métal. La couche métallique est dans cet exemple suffisamment fine et structurée pour former des ondulations aptes à coupler des modes de plasmon de surface supportés par les deux interfaces diélectrique - métal avec une onde lumineuse incidente. Lorsque la condition de couplage est satisfaite, l'énergie lumineuse peut traverser la couche métallique continue et ainsi produire un pic de transmission ; il s'agit ainsi de transmission résonnante.

La demande de brevet EP 3 099 513 au nom de la déposante décrit un composant optique de sécurité à résonance plasmonique montrant des effets visuels en réflexion différenciés sur le recto et sur le verso. Le composant optique de sécurité comprend comme dans l'exemple précédent une couche métallique agencée entre deux couches en matériau diélectrique transparent pour former deux interfaces diélectrique - métal. Dans cet exemple, la couche métallique est structurée pour former, dans une première zone de couplage, un premier réseau de couplage présentant un profil dissymétrique selon chacune de ses directions, et, dans une deuxième zone de couplage, un deuxième réseau de couplage présentant un profil dissymétrique selon chacune de ses directions, différent du premier réseau. Le deuxième réseau de couplage est par exemple le négatif du premier réseau de couplage. Un tel composant présente au niveau des première et deuxième zones de couplage, un effet de transmission résonante stable dans les première et deuxième zones de couplage, et lors de l'observation du composant sur chacune de ses faces. Du fait du caractère dissymétrique des profils des réseaux de couplage et de la différence entre les profils dissymétriques des premier et deuxième réseaux de couplage dans les première et deuxième zones de couplage, l'observation en réflexion sur un côté du composant présente par contre un effet coloré variable en fonction de chaque zone, l'effet coloré étant inversé entre les deux zones lors de l'observation du composant sur chacune de ses faces.

Dans cette même demande de brevet EP 3 099 513, il est également décrit un dépôt sur la couche métallique et dans une région délimitée, par exemple sous forme d'un motif reconnaissable, d'une couche en matériau diélectrique de plus faible ou de plus haut indice. Il en résulte un décalage de la bande spectrale de transmission résonante dans ladite région, et donc un effet coloré différencié.

La demande DE 10 2007 061979 A1 décrit un composant optique de sécurité à résonance plasmonique selon le préambule de la revendication 1, ledit composant comprenant notamment deux couches de matériaux diélectriques.

La présente description présente un composant optique de sécurité à résonance plasmonique, présentant, notamment en réflexion, des effets colorés originaux et distinctifs par rapport à ceux décrits dans les composants optiques de sécurité de l'état de l'art, permettant une authentification encore plus facile et fiable, y compris à l'oeil nu par un utilisateur non initié.

**Résumé de l'invention**

Selon un premier aspect, la présente description concerne un composant optique de sécurité à effet plasmonique, ledit composant pouvant être contrôlé à l'oeil nu, en réflexion, selon au moins une première face d'observation.

Le composant optique de sécurité selon le premier aspect comprend :

- au moins une première couche en matériau diélectrique, transparente, présentant un premier indice de réfraction,
- au moins une deuxième couche en matériau diélectrique, transparente, d'épaisseur comprise entre 20 nm et 150 nm, présentant un deuxième indice de réfraction, la différence entre le deuxième indice de réfraction et le premier indice de réfraction étant supérieure ou égale à 0,5 et ladite deuxième couche en matériau diélectrique étant en contact avec ladite première couche en matériau diélectrique, et
- une couche métallique en contact avec ladite au moins une deuxième couche en matériau diélectrique.

Selon l'invention, ladite première couche en matériau diélectrique, ladite deuxième couche en matériau diélectrique et ladite couche métallique forment une première double interface diélectrique-diélectrique-métal, comprenant une première interface diélectrique-diélectrique et une première interface diélectrique-métal, et structurée pour former, dans au moins une première zone de couplage, un premier réseau de couplage à deux dimensions avec une première direction et une deuxième direction, présentant une première période comprise entre 150 nm et 350 nm selon la première direction et une deuxième période comprise entre 150 nm et 350 nm selon la deuxième direction.

Selon l'invention, ledit premier réseau de couplage est déterminé pour générer un premier effet de résonance plasmonique à ladite au moins une première interface diélectrique-métal dans une première bande spectrale de résonance et l'épaisseur de ladite au moins une deuxième couche en matériau diélectrique est déterminée pour générer, au moyen dudit premier réseau de couplage, un effet de résonance plasmonique hybride, dans une deuxième bande spectrale de résonance différente de ladite première bande spectrale. Dans la présente description, ladite première couche en matériau diélectrique est également appelée couche en matériau diélectrique « bas indice » et ladite deuxième couche en matériau diélectrique est également appelée couche en matériau diélectrique « haut indice ». Plus généralement, une couche en matériau diélectrique dite « haut indice » n'est définie qu'en relation avec une couche en matériau diélectrique dite « bas indice » avec laquelle elle est en contact, une différence entre l'indice de réfraction de la couche en matériau diélectrique haut indice et l'indice de réfraction de la couche en matériau diélectrique bas indice étant supérieure ou égale à 0,5.

La déposante a montré que le choix d'une épaisseur suffisante de la couche en matériau diélectrique haut indice entraîne non seulement un décalage de la première bande spectrale de résonance plasmonique à l'interface diélectrique-métal mais également la génération d'un deuxième effet de résonance plasmonique, dit « hybride » dans une deuxième bande spectrale différente de la première bande spectrale. La déposante a montré que lors de la génération du premier effet de résonance plasmonique, décrit dans l'état de l'art, le champ électromagnétique est confiné à la surface du métal. Lors de la génération du deuxième effet de résonance plasmonique, l'énergie du champ électromagnétique reste maximale à la surface du métal mais diffuse dans la couche en matériau diélectrique haut indice, d'où le terme d'effet « hybride ».

Une bande spectrale de résonance au sens de la présente description peut être définie comme une plage continue de longueurs d'onde pour lesquelles on observe un creux dans la courbe de réflexion normalisée du composant optique de sécurité, lorsque le composant est éclairé en lumière blanche à incidence normale, le creux étant caractérisé par un maximum local et un minimum local consécutifs, pour lesquels une différence entre les valeurs de la réflexion normalisée est strictement supérieure à 0,2 (ou 20%). Pour chaque bande spectrale de résonance, on peut définir une longueur d'onde centrale de résonance correspondant à la longueur d'onde de ladite bande spectrale pour laquelle la réflexion normalisée présente une valeur minimale. Par bandes spectrales de résonance différentes, on comprend dans la présente description deux bandes spectrales présentant respectivement des longueurs d'onde centrales de résonance distinctes d'au moins 50 nm. La présence des deux bandes spectrales différentes se traduit, notamment lors d'une observation du composant optique de sécurité en réflexion, par des effets colorés originaux par rapport à ceux observés dans l'état de l'art, notamment des couleurs présentant des angles de teinte compris entre 120° et 320° sans ajout de colorants ni de pigments.

Dans la présente description, une couche en matériau diélectrique transparent est définie comme une couche présentant une transmission d'au moins 70%, de préférence au moins 80% pour une longueur d'onde comprise dans la bande spectrale visible, soit entre 400 nm et 800 nm.

Dans la présente description, un réseau à deux dimensions ou réseau « croisé » est un réseau défini par la superposition de deux ensembles d'ondulations périodiques s'étendant selon deux directions. On peut définir pour chaque ensemble d'ondulations un vecteur réseau comprenant une direction perpendiculaire aux ondulations et une norme inversement proportionnelle à la période.

Selon un ou plusieurs exemples de réalisation, le profil dudit au moins un premier réseau à deux dimensions est à variation continue selon chaque direction, ce type de profil permettant notamment une meilleure propagation des modes plasmoniques. Par exemple, le profil dudit au moins un premier réseau selon chaque direction est sinusoïdal ou quasi-sinusoïdal, c'est-à-dire avec un rapport cyclique différent de 0,5. Le rapport cyclique est défini sur une période présentant un creux et un pic d'ondulation, comme le rapport de la longueur présentant une valeur supérieure à la valeur moyenne entre le pic et le creux et la période.

Généralement, ledit au moins un premier réseau à deux dimensions selon la présente description peut être symétrique, asymétrique ou dissymétrique. Par symétrique, on comprend dans la présente description que ledit au moins un premier réseau de couplage est identique vu de la face d'observation ou de la face opposée à la face d'observation. Par dissymétrique, on comprend que ledit au moins un premier réseau de couplage est différent vu de la face d'observation ou de la face opposée à la face d'observation. Un tel réseau dissymétrique est décrit par exemple dans le brevet EP 3 099 513 au nom de la déposante. Il est caractérisé par un profil qui ne présente pas de symétrie centrale (par rapport à un point), selon chacune des directions. Par asymétrique, on entend un réseau qui présente selon une direction une ondulation avec un front montant différent du front descendant sur une période (réseau dit « blasé »).

Selon un ou plusieurs exemples de réalisation, la première direction et la deuxième direction du réseau de couplage sont sensiblement perpendiculaires. Le réseau à deux dimensions forme ainsi une structure dont la forme est de type « boite d'oeufs ». Par sensiblement perpendiculaires, on comprend que la première et la deuxième direction présentent un angle de 90°± 5°. Un tel composant optique de sécurité présente, dans le cas d'une maille carrée, une stabilité de l'effet coloré lors d'une rotation azimutale entre 0° et 90°. Dans le cas d'une maille rectangulaire non carrée, on pourra observer une variation de l'effet coloré lors d'une rotation azimutale entre 0° et 90°.

Selon d'autres exemples de réalisation, la première direction et la deuxième direction du réseau de couplage peuvent présenter un angle différent de 90°, par exemple compris entre 30° et 60°.

Selon un ou plusieurs exemples de réalisation, la différence entre l'indice de réfraction de la deuxième couche en matériau diélectrique haut indice et l'indice de réfraction de la première couche en matériau diélectrique bas indice est supérieure ou égale à 0,8. Il est alors possible d'exciter des modes hybrides pour des épaisseurs de la couche en matériau diélectrique haut indice plus faibles que si la différence d'indice vaut 0.5.

Selon un ou plusieurs exemples de réalisation, l'épaisseur de ladite au moins une deuxième couche en matériau diélectrique haut indice est comprise entre 20 nm et 100 nm. Au-delà de 100 nm, la couche de matériau diélectrique haut indice peut en effet générer dans des zones non structurées des teintes non voulues. En pratique, l'épaisseur de ladite au moins une deuxième couche en matériau diélectrique haut indice peut être comprise entre 40 nm et 100 nm.

Selon un ou plusieurs exemples de réalisation, ladite au moins une deuxième couche en matériau diélectrique haut indice résulte du dépôt, par exemple un dépôt sous vide, d'une couche de sulfure de zinc (ZnS), dioxyde de titane ($TiO_2$), nitrure de silicium ($Si_3N_4$). D'autres exemples de matériaux pour la formation de la couche en matériau diélectrique haut indice sont connus et divulgués, par exemple dans le brevet US4856857.

Selon un ou plusieurs exemples de réalisation, ladite au moins une première couche en matériau diélectrique bas indice résulte par exemple du dépôt, par exemple un dépôt sous vide, d'une couche organique d'indice optique généralement compris entre 1,4 et 1, 6, par exemple une colle ou une résine. Des exemples de matériaux pour la formation de la couche en matériau diélectrique bas indice sont connus et divulgués, par exemple dans le brevet US4856857.

Selon un ou plusieurs exemples de réalisation, l'épaisseur de ladite au moins une deuxième couche en matériau diélectrique haut indice est suffisante pour permettre un effet de résonance de modes guidés dans la couche en matériau diélectrique haut indice, dans une troisième bande de résonance distincte de la première et de la deuxième bande de résonance. Dans des exemples de réalisation, la présence de la troisième bande de résonance peut être recherchée pour générer des effets colorés avec d'autres angles de teinte. Dans d'autres exemples de réalisation au contraire, on limitera l'épaisseur de ladite au moins une deuxième couche en matériau diélectrique haut indice pour éviter l'effet de résonance de modes guidés et obtenir l'effet coloré résultant seulement du premier effet de résonance plasmonique et de l'effet de résonance plasmonique hybride.

Selon un ou plusieurs exemples de réalisation, le composant optique de sécurité comprend en outre une troisième couche en matériau diélectrique, transparente, présentant un troisième indice de réfraction, en contact avec ladite couche métallique sur une face opposée à la face de la couche métallique en contact avec la deuxième couche en matériau diélectrique haut indice, pour former une deuxième interface diélectrique-métal, ladite deuxième interface diélectrique-métal étant structurée dans ladite au moins une première zone de couplage selon ledit premier réseau de couplage.

Il est alors possible d'observer en réflexion, et selon une deuxième face d'observation opposée à la première face d'observation, un effet coloré résultant d'un effet de résonance plasmonique à la deuxième interface diélectrique-métal.

Selon un ou plusieurs exemples de réalisation, le composant optique de sécurité comprend en outre une troisième couche en matériau diélectrique, transparente, présentant un troisième indice de réfraction et une quatrième couche en matériau diélectrique, transparente, d'épaisseur comprise entre 20 nm et 150 nm, présentant un quatrième indice de réfraction, la différence entre le quatrième indice de réfraction et le troisième indice de réfraction étant supérieure ou égale à 0,5. Ladite quatrième couche en matériau diélectrique (haut indice) est en contact avec la couche métallique sur une face opposée à la face de la couche métallique en contact avec la deuxième couche en matériau diélectrique et ladite troisième couche en matériau diélectrique (bas indice) est en contact avec ladite quatrième couche en matériau diélectrique. Ainsi, ladite troisième couche en matériau diélectrique bas indice, ladite quatrième couche en matériau diélectrique haut indice et ladite couche métallique forment une deuxième double interface diélectrique-diélectrique-métal, comprenant une deuxième interface diélectrique-diélectrique et une deuxième interface diélectrique-métal, et structurée, dans ladite au moins une première zone de couplage, selon le premier réseau de couplage.

Il est alors possible d'observer en réflexion, et selon une deuxième face d'observation opposée à la première face d'observation, un effet coloré résultant d'un effet de résonance plasmonique à la deuxième interface diélectrique-métal ainsi que d'un effet de résonance plasmonique hybride, dans le cas d'une quatrième couche en matériau diélectrique haut indice suffisamment épaisse.

Selon un ou plusieurs exemples de réalisation, l'épaisseur de la quatrième couche en matériau diélectrique haut indice est différente de l'épaisseur de la deuxième couche en matériau diélectrique haut indice. Il est ainsi possible d'obtenir des couleurs différentes lors de l'observation du composant selon la première face d'observation ou selon la deuxième face d'observation, opposée à la première face d'observation. Ces couleurs pourront être déterminées en fonction du profil des réseaux vus de la deuxième face d'observation, lorsque les réseaux sont dissymétriques.

Selon un ou plusieurs exemples de réalisation, la couche métallique est « épaisse », c'est-à-dire d'épaisseur suffisante pour permettre la réflexion de la lumière incidente sur la double interface diélectrique-diélectrique-métal avec une transmission maximale résiduelle en fonction de la longueur d'onde de 2%. Dans ce cas, le composant optique de sécurité ne peut pas être observé en transmission. Il peut cependant être observé en réflexion selon chacune des faces d'observation si l'ensemble des couches autres que la couche métallique sont transparentes.

Selon un ou plusieurs exemples de réalisation, la couche métallique est suffisamment fine pour permettre le couplage de modes de plasmon de surface supportés par les première et deuxième interfaces diélectrique-métal de part et d'autre de la couche métallique. On observe alors en plus d'effets colorés en réflexion, un effet coloré en transmission identique quelle que soit la face d'observation, cet effet coloré résultant d'un effet de transmission résonante.

Selon un ou plusieurs exemples de réalisation, la couche métallique comprend un métal choisi parmi l'aluminium, l'argent, l'or, le cuivre, le chrome, le nickel. D'autres exemples de matériaux pour la formation de la couche métallique sont connus et divulgués, par exemple dans le brevet US4856857.

Selon un ou plusieurs exemples de réalisation, ladite première période et ladite deuxième période dudit au moins un premier réseau de couplage sont différentes. Dans le cas de directions du réseau perpendiculaires, la maille est alors rectangulaire, non carrée. La déposante a montré que l'effet de résonance hybride est fortement dépendant de la période dans la direction telle que le vecteur réseau est perpendiculaire au plan d'incidence. Des périodes différentes selon la première et la deuxième direction permettent de ce fait d'atteindre des couleurs non observables avec une maille carrée. Par ailleurs, avec une maille rectangulaire non carrée, il est possible d'observer un changement de couleur par rotation azimutale du composant entre 0° et 90°.

Ainsi, selon un ou plusieurs exemples de réalisation, le composant optique de sécurité présente, en réflexion selon ladite première face d'observation et selon un angle d'observation donné, par exemple à incidence normale, un premier effet coloré avec un premier angle de teinte selon un premier angle azimutal donné et un deuxième effet coloré avec un deuxième angle de teinte selon un deuxième angle azimutal donné, le deuxième angle de teinte étant différent du premier angle de teinte d'une valeur minimale donnée, par exemple d'une valeur au moins égale à 20°, avantageusement 30°. Le premier angle azimutal est par exemple de 0° et le deuxième angle azimutal est par exemple de 90°. L'angle azimutal est de 0° pour une direction donnée du réseau de couplage lorsque le plan d'incidence est confondu avec le plan comprenant ladite direction et la direction normale au composant.

Selon un ou plusieurs exemples de réalisation, le rapport entre la profondeur dudit premier réseau de couplage et ladite première période ou ladite deuxième période (rapport de forme selon l'une des première ou deuxième directions) est compris entre 10% et 80%, par exemple entre 10% et 50%.

Selon un ou plusieurs exemples de réalisation, ladite au moins une première double interface diélectrique-diélectrique-métal est structurée pour former dans au moins une deuxième zone, une structure différente dudit premier réseau de couplage, ladite au moins une première double interface étant continue sur l'ensemble desdites zones.

Selon un ou plusieurs exemples de réalisation, ladite au moins une deuxième zone est jointive avec ladite première zone de couplage.

Par double interface « continue », on comprend dans la présente description que l'ensemble des couches formant ladite au moins une première interface diélectrique - diélectrique-métal sont continues sur l'ensemble desdites zones, c'est-à-dire ne présentent aucune interruption.

Selon un ou plusieurs exemples de réalisation, ladite structure de la deuxième zone est formée d'un deuxième réseau de couplage, différent du premier réseau de couplage.

Le deuxième réseau de couplage est différent du premier réseau de couplage du fait qu'au moins un des paramètres du deuxième réseau comprenant : le profil du réseau, l'orientation azimutale, la profondeur du réseau, la période selon une première direction ou selon une deuxième direction, est différent du paramètre correspondant pour le premier réseau de couplage.

Par exemple, le deuxième réseau de couplage comprend comme le premier réseau de couplage une première direction et une deuxième direction, avec une première période comprise entre 150 nm et 350 nm selon la première direction et une deuxième période comprise entre 150 nm et 350 nm selon la deuxième direction, et des paramètres de réseau optimisés pour présenter, en réflexion, un deuxième effet coloré différent du premier effet coloré produit par le premier réseau de couplage, par exemple une deuxième couleur présentant un angle de teinte différent d'au moins 30° de l'angle de teinte de la première couleur générée dans la première zone de couplage.

Selon un ou plusieurs exemples de réalisation, ladite structure de la deuxième zone est formée d'une structure configurée pour diffuser la lumière incidente ou d'une structure diffractive à l'ordre zéro ou à un ordre supérieur.

Il est ainsi possible d'observer, selon au moins la première face d'observation, des effets colorés notamment en réflexion différents dans les deux zones. Il est remarquable de noter qu'un observateur pourra observer les deux zones avec un repérage parfait entre les zones, du fait que la différence d'effet de couleur entre les zones provient d'une différence de structure et non d'impression.

Ainsi, selon un ou plusieurs exemples de réalisation, le composant optique de sécurité présente, en réflexion selon ladite première face d'observation et selon un angle d'observation donné, par exemple à incidence normale, un premier effet coloré avec un premier angle de teinte dans la première zone de couplage et un deuxième effet coloré avec un deuxième angle de teinte dans ladite deuxième zone, le deuxième angle de teinte étant différent du premier angle de teinte d'une valeur minimale donnée, par exemple d'une valeur au moins égale à 20°, avantageusement 30°.

Selon un ou plusieurs exemples de réalisation, ladite au moins une première double interface diélectrique-diélectrique-métal n'est pas structurée dans au moins une zone jointive avec ladite première zone de couplage, ladite au moins une première double interface étant continue sur l'ensemble desdites zones.

Comme précédemment, un observateur pourra observer une zone colorée et une zone réfléchissante non colorée (car non structurée) avec un repérage parfait entre les zones, du fait que la différence entre les zones provient d'une différence de structure et non d'impression.

Selon un ou plusieurs exemples de réalisation, ladite au moins une première double interface diélectrique-diélectrique-métal est structurée pour former une pluralité de zones jointives, dont ladite première zone de couplage, ladite au moins une première double interface étant continue sur l'ensemble desdites zones. Les zones de la pluralité de zones forment par exemple un motif reconnaissable. La ou les zones autres que ladite première zone de couplage peut comprendre au moins une zone structurée et/ou au moins une zone non structurée.

De façon générale, avec une pluralité de zones différentes, dont ladite première zone de couplage, il est possible de faire apparaître une information seulement selon un angle azimutal donné et/ou une information différente au recto (observation selon la première face d'observation) ou au verso (observation selon la deuxième face d'observation, opposée à ladite première face d'observation). Par exemple, il sera possible de faire apparaître une information seulement lors de l'observation selon une face du document. Selon un ou plusieurs exemples de réalisation, ladite au moins une première double interface diélectrique-diélectrique-métal est structurée pour former, dans ladite au moins une première zone de couplage, une première structure microscopique modulée par ledit premier réseau de couplage.

Selon un ou plusieurs exemples de réalisation, ladite première structure microscopique est une structure diffractive. Par exemple, la première structure microscopique diffractive comprend un bas-relief configuré pour simuler une image en relief d'un objet en relief, comme décrit par exemple dans le brevet EP2567270 au nom de la déposante, ou un effet visuel dynamique, par exemple le défilement d'un objet visuel graphique par un mouvement de tilt du composant optique de sécurité, comme décrit par exemple dans le brevet EP3129238 au nom de la déposante ou dans le brevet FR3066954 au nom de la déposante. La première structure microscopique diffractive peut comprendre également un élément diffractif de type hologramme synthétisé par ordinateur, comme décrit par exemple dans le brevet FR 3051565 au nom de la déposante, ou plus généralement toute structure microscopique diffractive.

Selon un ou plusieurs exemples de réalisation, ladite première structure microscopique comprend des microstructures réparties de façon aléatoire pour produire un effet de diffusion optique. De telles microstructures sont décrites par exemple dans le brevet EP 2836371 au nom de la déposante. Il en résulte alors un cône de visibilité de l'effet optique élargi.

Selon un ou plusieurs exemples de réalisation, le composant optique de sécurité est adapté à la sécurisation d'un document ou d'un produit, et comprend en outre, sur la face opposée à la face d'observation, une couche adaptée pour le transfert du composant sur le document ou le produit, par exemple une couche d'adhésif permanent ou une couche d'adhésif réactivable.

Selon un ou plusieurs exemples de réalisation, le composant optique de sécurité comprend en outre, du côté de la face d'observation, un film support destiné à être détaché après transfert du composant sur le document ou le produit.

Selon un ou plusieurs exemples de réalisation, le composant optique de sécurité est adapté à la fabrication d'un fil de sécurité pour la sécurisation des billets de banque, et comprend, du côté de la face d'observation et/ou sur la face opposée à la face d'observation, une ou plusieurs couches de protection.

Le composant optique de sécurité selon le premier aspect peut comprendre par ailleurs une ou plusieurs couches additionnelles transparentes en fonction des besoins de l'application, sans que cette ou ces couches additionnelles ne contribuent à l'effet visuel recherché. Selon un deuxième aspect, la présente description concerne un élément optique de sécurité destiné à la sécurisation d'un objet, par exemple un document de valeur, et comprenant au moins un composant optique de sécurité selon le premier aspect.

Selon un troisième aspect, la présente description concerne un objet sécurisé, par exemple un document de valeur sécurisé, comprenant un substrat et le composant optique de sécurité selon le premier aspect ou ledit élément de sécurité selon le deuxième aspect agencé sur ledit support.

Le document de valeur est par exemple un billet de banque, un passeport, un visa, un permis de conduire, une carte d'identité ou tout document d'identification. Le substrat comprend par exemple du polycarbonate, du PVC, du PET, du papier, une feuille cartonnée, etc. Avantageusement le substrat comprend une zone de transparence telle que les 2 faces du composant puissent être observées à tour de rôle.

Le composant optique de sécurité selon le premier aspect peut également être apposé sur un produit susceptible de subir une tentative de falsification ou de contrefaçon tel qu'un produit de marque, un alcool, un composant électrique. Dans ce cas le composant optique pourra être délivré sous forme d'étiquette adhésive potentiellement destructible telle que connue par l'homme du métier.

Selon un ou plusieurs exemples de réalisation, le substrat présente une forme rectangulaire avec deux axes perpendiculaires, les axes étant colinéaires aux directions dudit au moins un premier réseau de couplage. Selon d'autres exemples de réalisation, les axes sont non colinéaires aux directions dudit au moins un premier réseau de couplage.

Lorsque les directions du réseau ne sont pas alignées avec les axes du document, cela revient à une observation avec un angle azimutal différent de zéro. On observe alors des effets colorés avec une variation de couleur en tilt haut bas plus importante que si les directions du réseau de couplage étaient colinéaires aux axes du document.

Selon un quatrième aspect, la présente description concerne des procédés de fabrication de composants optiques de sécurité selon le premier aspect.

Selon un ou plusieurs exemples de réalisation, le procédé de fabrication d'un composant optique de sécurité selon le premier aspect comprend :

- la formation de ladite première couche en matériau diélectrique;
- le dépôt sur ladite première couche en matériau diélectrique de ladite deuxième couche en matériau diélectrique ;
- le dépôt sur ladite deuxième couche en matériau diélectrique de ladite couche métallique, pour former ladite première double interface diélectrique-diélectrique-métal, ladite première double interface diélectrique-diélectrique-métal étant structurée pour former, dans ladite au moins première zone de couplage, ledit premier réseau de couplage.

Selon un ou plusieurs exemples de réalisation, le procédé comprend la structuration de ladite première couche en matériau diélectrique, par exemple par estampage (par exemple par pressage à chaud ou par moulage à froid puis réticulation UV), puis le dépôt de ladite deuxième couche en matériau diélectrique et de ladite couche métallique.

Dans tous les cas, la structuration de la double interface permet de générer la ou les différentes zones aux effets colorés différents, permettant un repérage parfait entre lesdites zones. La déposante a ainsi montré la possibilité de produire une image multicolore à l'ordre zéro, sans impression, avec un empilement de couches continues sur l'ensemble du composant.

Selon un ou plusieurs exemples de réalisation, le procédé comprend en outre :

- le dépôt d'une couche de protection en matériau diélectrique.

Selon un ou plusieurs exemples de réalisation, ladite couche de protection est une troisième couche en matériau diélectrique transparente, déposée en contact avec la couche métallique pour former une deuxième interface diélectrique-métal, ladite deuxième interface diélectrique-métal étant structurée dans ladite au moins une première zone de couplage selon ledit premier réseau de couplage.

Selon un ou plusieurs exemples de réalisation, le procédé comprend en outre :

- le dépôt d'une quatrième couche en matériau diélectrique, transparente, en contact avec ladite couche métallique ; et
- ladite couche de protection forme une troisième couche en matériau diélectrique, transparente, en contact avec ladite quatrième couche en matériau diélectrique, une différence entre un indice de réfraction de la quatrième couche en matériau diélectrique et un indice de réfraction de la troisième couche en matériau diélectrique étant supérieure ou égale à 0,5.

Ladite troisème couche en matériau diélectrique (bas indice), ladite quatrième couche en matériau diélectrique (haut indice) et ladite couche métallique forment une deuxième double interface diélectrique-diélectrique-métal, comprenant une deuxième interface diélectrique-diélectrique et une deuxième interface diélectrique-métal, et structurée, dans ladite au moins une première zone de couplage, selon ledit premier réseau de couplage. Selon un troisième aspect, la présente description concerne un procédé d'authentification d'un composant optique de sécurité selon le premier aspect comprenant :

- une étape d'illumination dudit composant optique de sécurité en lumière naturelle et l'observation, à travers un polariseur linéaire, d'un changement de couleur de l'effet coloré en fonction de la direction de polarisation; ou
- une étape d'illumination dudit composant optique de sécurité en lumière polarisée linéaire et l'observation d'un changement de couleur de l'effet coloré en fonction de la direction de la polarisation.

Selon un ou plusieurs exemples de réalisation, ledit au moins un premier réseau de couplage comprend des périodes identiques selon la première direction et la deuxième direction et l'authentification est fait selon un angle différent de l'incidence normale, par exemple un angle d'observation compris entre 15° et 60°.

**Brève description des figures**

D'autres avantages et caractéristiques de l'invention apparaîtront à la lecture de la description, illustrée par les figures suivantes :

[Fig. 1A] représente un schéma illustrant une vue de coupe d'un exemple de composant optique de sécurité selon la présente description ;
[Fig. 1B] représente un schéma illustrant une vue (partielle) en 3D d'une double interface structurée d'un exemple de composant optique de sécurité selon la présente description ;
[Fig. 2A] représente un schéma illustrant des courbes de la réflexion normalisée en fonction de la longueur d'onde, pour différentes épaisseurs de la deuxième couche en matériau diélectrique (haut indice), les courbes de réflexion étant obtenues en incidence normale avec un exemple de composant optique de sécurité selon la présente description ;
[Fig. 2B] représente un schéma illustrant des courbes de la transmission normalisée en fonction de la longueur d'onde, pour différentes épaisseurs de la deuxième couche en matériau diélectrique (haut indice), les courbes de transmission étant obtenues en incidence normale avec le même exemple de composant optique de sécurité que celui de la Fig. 2A ;
[Fig. 2C] représente un schéma illustrant des courbes de la réflexion normalisée en fonction de la longueur d'onde, pour les polarisations TE et TM, les courbes de réflexion étant obtenues avec une incidence de 40°, avec le même exemple de composant optique de sécurité que celui de la Fig. 2A et une épaisseur de la couche en matériau diélectrique haut indice de 80 nm ;
[Fig. 3A] représente une image montrant la répartition du champ électromagnétique dans un exemple de composant optique de sécurité selon la présente description, à une longueur d'onde comprise dans une première bande spectrale correspondant au premier effet de résonance plasmonique ;
[Fig. 3B] représente une image montrant la répartition du champ électromagnétique dans le même exemple de composant optique de sécurité que celui de la Fig. 3A, à une longueur d'onde comprise dans une deuxième bande spectrale correspondant à un effet de résonance plasmonique hybride ;
[Fig. 3C] représente une image montrant la répartition du champ électromagnétique dans le même exemple de composant optique de sécurité que celui de la Fig. 3A, à une longueur d'onde comprise dans une troisième bande spectrale correspondant à un effet de résonance de modes guidés ;
[Fig. 4A] représente un schéma illustrant une vue de dessus d'une double interface d'un exemple de composant optique de sécurité, ladite double interface étant structurée pour former une pluralité de zones jointives formant un motif reconnaissable ;

[Fig. 4B] représente un schéma illustrant un premier effet coloré visible en réflexion, selon la première face d'observation, avec un composant optique de sécurité selon la présente description dans lequel la double interface est structurée selon le motif illustré sur la Fig. 4A ;

[Fig. 4C] représente un schéma illustrant un deuxième effet coloré visible en réflexion, selon la face opposée à la première face d'observation, avec un composant optique de sécurité identique à celui illustré sur la Fig. 4B ;

[Fig. 4D] représente un schéma illustrant un troisième effet coloré visible en transmission, avec un composant optique de sécurité identique à celui illustré sur la Fig. 4B ;

[Fig. 5A] représente un schéma illustrant des courbes montrant la position spectrale du mode hybride en fonction de l'épaisseur de la deuxième couche en matériau diélectrique (haut indice), dans le cas d'un réseau de couplage présentant une maille carrée et pour différentes valeurs de la période, dans un exemple de composant optique de sécurité selon la présente description ;

[Fig. 5B] représente un schéma illustrant les couleurs que l'on peut obtenir, en faisant varier la période du réseau de couplage, dans le même exemple de composant optique de sécurité que celui utilisé pour la Fig. 5A, pour différentes valeurs de l'épaisseur de la deuxième couche en matériau diélectrique (haut indice) ;

[Fig. 6A] représente un schéma illustrant une vue (partielle) en 3D d'une première double interface et d'une deuxième double interface dans un exemple de composant optique de sécurité selon la présente description ;

[Fig. 6B] représente un schéma illustrant un premier effet coloré visible en réflexion, selon la première face d'observation, avec un composant optique de sécurité selon la présente description avec une première et une deuxième double-interfaces, dans lequel les double interfaces sont structurées selon le motif illustré sur la Fig. 4A;

[Fig. 6C] représente un schéma illustrant un deuxième effet coloré visible en réflexion, selon la face opposée à la première face d'observation, avec un composant optique de sécurité identique à celui illustré sur la Fig. 6B ;

[Fig. 6D] représente un schéma illustrant un troisième effet coloré visible en transmission, avec un composant optique de sécurité identique à celui illustré sur la Fig. 6B ;

[Fig. 7A] représente un schéma illustrant en vue de dessus un réseau de couplage avec des périodes différentes selon la première et la deuxième direction, dans un exemple d'un composant optique de sécurité selon la présente description ;

[Fig. 7B] représente un schéma illustrant des courbes montrant la réflexion normalisée en fonction de la longueur d'onde, pour une valeur donnée de la période du réseau de couplage selon une direction et différentes valeurs de période du réseau de couplage selon une autre direction, dans un exemple de composant optique de sécurité selon la présente description ;

[Fig. 8] représente un schéma illustrant un histogramme des angles de teinte dans un composant optique de sécurité selon la présente description, et dans un composant optique de sécurité selon l'état de l'art ;

[Fig. 9] représente un schéma illustrant un document sécurisé avec un élément de sécurité intégrant un exemple de composant optique de sécurité selon la présente description ; [Fig. 10] représente un schéma illustrant la sphère CIE Lab (ou « 1976 CIE L*a*b* ») adoptée par le Comité International de l'Eclairage (CIE) en 1976 et définie selon la norme ISO 11664-4.

**Description détaillée de l'invention**

Sur les figures, les éléments ne sont pas représentés à l'échelle pour une meilleure visibilité.

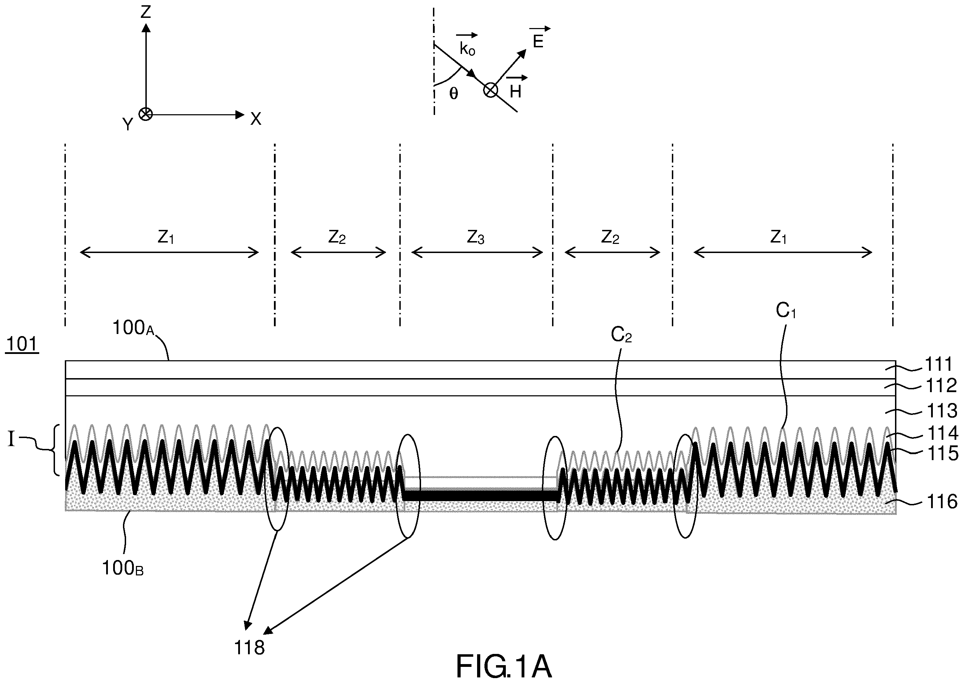

La Fig. 1A représente un schéma illustrant une vue de coupe (partielle) d'un exemple de composant optique de sécurité selon la présente description.

Le composant optique de sécurité 101 représenté sur la FIG. 1A représente par exemple un composant optique de sécurité destiné à être transféré sur un document ou un produit en vue de sa sécurisation. Il comprend selon cet exemple un film support 111, par exemple un film en matériau polymère, par exemple un film en polyéthylène téréphtalate (PET) de quelques dizaines de micromètres, typiquement 15 à 100 $\mu$m, ainsi qu'une couche de détachement 112 (optionnelle), par exemple en cire naturelle ou synthétique. La couche de détachement permet de retirer le film support en polymère 111 après transfert du composant optique sur le produit ou document à sécuriser.

Le composant optique de sécurité 101 comprend par ailleurs une première couche en matériau diélectrique dite « bas indice » 113, transparente dans le visible, présentant un premier indice de réfraction $n_1$ et une deuxième couche en matériau diélectrique dite « haut indice » 114, transparente dans le visible, en contact avec la première couche bas indice 113, et présentant un deuxième indice de réfraction $n_2$. La différence entre le deuxième indice de réfraction et le première indice de réfraction est supérieure ou égale à 0,5, d'où l'appellation de première couche diélectrique « bas indice » 113 et deuxième couche diélectrique « haut indice » 114. Le composant optique de sécurité 101 comprend en outre une couche métallique 115 en contact avec la deuxième couche en matériau diélectrique haut indice 114.

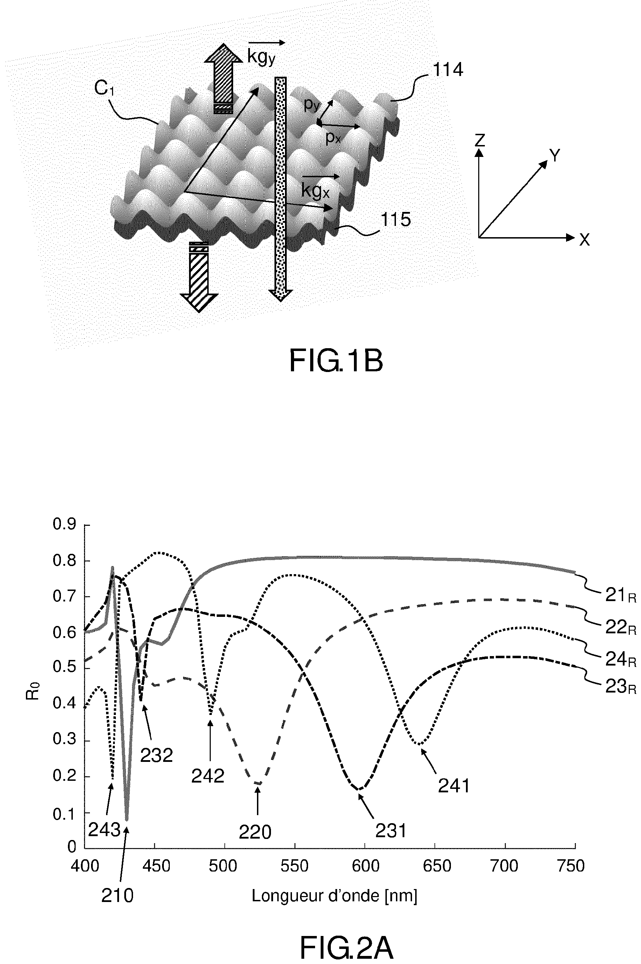

Sur la Fig. 1A, la première couche en matériau diélectrique bas indice 113, la deuxième couche en matériau diélectrique haut indice 114 et la couche métallique 115 forment une première double interface diélectrique-diélectrique-métal continue I, comprenant une première interface diélectrique-diélectrique et une première interface diélectrique-métal. La double interface I est structurée pour former, dans au moins une première zone de couplage $Z_1$, un premier réseau de couplage $C_1$ à deux dimensions, dont un exemple est illustré sur la Fig. 1B et qui sera décrit plus en détails par la suite. Par double interface continue, on comprend que l'ensemble des couches 113, 114, 115 qui constituent la double interface I sont déposées de façon continue, c'est-à-dire sans interruptions, sur au moins une région comprenant ladite première zone de couplage. Plus précisément, dans le cas de la Fig. 1A, comme cela sera décrit plus en détails par la suite, la double interface I est structurée pour former une pluralité de zones jointives $Z_1$, $Z_2$, $Z_3$, dont la première zone de couplage $Z_1$, et l'ensemble des couches 113, 114, 115 sont continues sur la pluralité desdites zones.

Dans l'exemple de la FIG. 1A, le composant optique de sécurité 101 comprend également une couche de protection 116, en matériau diélectrique et en contact avec la couche métallique 115. La couche de protection 116 peut par ailleurs former une couche adhésive ou une couche de protection. Comme cela sera décrit plus en détails par la suite, la couche de protection 116 peut également former une troisième couche en matériau diélectrique, transparente dans le visible, présentant un troisième indice de réfraction $n_3$ et formant une deuxième interface diélectrique-métal, ladite deuxième interface diélectrique-métal étant continue et structurée de la même manière que la double interface I.

Le composant optique de sécurité peut comprendre par ailleurs une ou plusieurs couches (non représentées sur la FIG. 1A) non fonctionnelles optiquement mais adaptées à l'application, par exemple, une couche d'adhésif si la couche 116 ne forme pas déjà une couche adhésive, par exemple une couche d'adhésif réactivable à chaud, pour le transfert du composant optique de sécurité sur le produit ou document.

Selon un exemple de réalisation particulier, la couche de détachement 112 peut être discontinue, par exemple pour la formation d'une étiquette. Par ailleurs, la couche adhésive peut présenter un pouvoir adhérent permanent de sorte qu'un support intermédiaire est utilisé pour permettre la manipulation du composant avant son application sur le document ou le produit à protéger.

En pratique, comme cela sera détaillé par la suite, le composant optique de sécurité peut être fabriqué en empilant les couches sur le film support 111, puis le composant est transféré sur un document/produit à sécuriser grâce à la couche d'adhésif. Optionnellement, le film support 111 peut alors être détaché, par exemple au moyen de la couche de détachement 112. La face principale d'observation $100_A$ du composant optique de sécurité (ou première face d'observation) se trouve ainsi du côté de la première couche 113 opposé à la face gravée de la couche 113.

Dans d'autres exemples, le composant optique de sécurité peut être destiné à la sécurisation de billets de banque ; il s'agit par exemple d'une piste appliquée par collage à chaud, d'une partie d'un fil de sécurité destiné à être intégré dans le papier pendant la fabrication du billet. Dans ces autres exemples, le composant optique de sécurité comprend comme précédemment un film support 111 (12 à 25 μm) qui servira également de film de protection au fil de sécurité, mais pas de couche de détachement. Le composant optique de sécurité peut comprendre également dans ces autres exemples, en plus de la couche de protection 116, des couches optionnelles, comme une couche de protection, par exemple un deuxième film polymère ou un vernis. Comme dans l'exemple précédent, la fabrication peut être réalisée par empilement des couches sur le film support 111.

Il apparaitra à l'homme du métier que d'autres couches non fonctionnelles optiquement dans le domaine spectral du visible peuvent être ajoutées en fonction des besoins de l'application dans chacun des exemples décrits ci-dessus. A noter que si les couches additionnelles, non fonctionnelles optiquement, par exemple la couche adhésive, ou les couches de contraste et/ou de protection sont transparentes dans le visible, ainsi que le substrat de destination, le composant optique de sécurité pourra être visible des deux côtés. Selon la présente description, ledit au moins un premier réseau de couplage $C_1$, dont un exemple est illustré selon une vue en 3 dimensions sur la Fig. 1B, est un réseau à deux dimensions, avec une première direction X et une deuxième direction Y, présentant une première période $p_x$ sublongueur d'onde, comprise entre 150 nm et 350 nm, selon la première direction et une deuxième période $p_y$ sublongueur d'onde, comprise entre 150 nm et 350 nm, selon la deuxième direction. Selon la présente description, le premier réseau de couplage $C_1$ est déterminé pour générer un premier effet de résonance plasmonique à ladite au moins une première interface diélectrique-métal dans une première bande spectrale de résonance.

Sur la Fig. 1B, seules la couche diélectrique haut indice 114 et la couche métallique 115 sont représentées. Le réseau de couplage est formé dans cet exemple par deux ensembles d'ondulations s'étendant selon les deux directions X, Y pour former une structure à deux dimensions. Dans cet exemple, les deux directions sont perpendiculaires. Le réseau est caractérisé par le pas (ou période) de chaque ensemble d'ondulations selon chacune des directions X et Y, la profondeur ou amplitude de l'ondulation (définie comme la hauteur entre le pic et le creux), le profil du réseau selon chaque direction et le rapport cyclique selon chaque direction. La profondeur du réseau est avantageusement comprise entre 10% et 80% du pas du réseau, avantageusement entre 10% et 50%. Le profil des ondulations est par exemple sinusoïdal ou quasi sinusoïdal, ou plus généralement à variation continue comme illustré sur la Fig. 1B, ce type de profil permettant une meilleure propagation des modes plasmoniques et étant compatible avec des méthodes de fabrication par photolithographie. Bien entendu, d'autres profils de réseaux de couplages bidimensionnels sont possibles, que ce soit des réseaux symétriques, dissymétriques ou asymétriques.

De façon générale, il est connu qu'à l'interface entre un matériau conducteur, par exemple un métal, et un matériau diélectrique d'indice de réfraction $n_d$, peut se propager une onde électromagnétique de surface associée à une oscillation collective d'électrons à la surface, appelée plasmon de surface. Ce phénomène est par exemple décrit dans l'ouvrage de base de H. Raether (« Surface plasmons », Springer-Verlag, Berlin Heidelberg). Le couplage d'une onde lumineuse incidente à un mode plasmonique peut être obtenu de différentes façons, notamment par la structuration de l'interface pour former un réseau de couplage, par exemple un réseau de couplage tel que décrit au moyen de la Fig. 1B.

Selon chaque direction du réseau de couplage, on peut définir un vecteur réseau $\mathbf{k_{gx}}$, $\mathbf{k_{gy}}$ de direction perpendiculaire aux traits du réseau et de norme définie respectivement par $k_{gx} = 2\pi/p_x$ et $k_{gy} = 2\pi/p_y$.

Comme décrit dans le brevet EP 2 771 724 au nom de la déposante, une telle structure présente une réponse différente en fonction de la polarisation de l'onde incidente.

Ainsi, on considère dans un premier temps une onde incidente de longueur d'onde $\lambda$, de polarisation TM (onde transverse magnétique), c'est-à-dire une onde incidente pour laquelle le champ magnétique **H** est perpendiculaire au plan d'incidence XZ défini comme le plan comprenant le vecteur d'onde $\mathbf{k_0}$ de l'onde incidente et la direction Z normale au composant (plan de la figure sur la figure 1A). L'onde de polarisation TM est par ailleurs incidente sur le réseau avec un azimut de 0° par rapport au réseau défini par le vecteur réseau $\mathbf{k_{gx}}$ et un angle d'incidence $\theta$ dans la couche 113 par rapport à l'axe Z normal au plan du réseau. Pour qu'il y ait couplage, c'est-à-dire transfert d'énergie entre l'onde incidente dans un milieu diélectrique de permittivité relative $\varepsilon d$ et le mode plasmonique, on montre que l'égalité suivante doit être satisfaite (voir H.Raether, précédemment cité) :

[Math 1]

$$k_{sp} = n_d k_0 \sin\theta + m.\, k_{gx}$$

Où $m$ est l'ordre diffracté évanescent, $k_0$ est le nombre d'onde défini par $k_0 = 2\pi/\lambda$, $k_{sp}$ est défini par $k_{sp} = n_{sp} k_0$, où $n_{sp}$ est l'indice effectif du plasmon, donné par :

[Math 2]

$$n_{sp} = \sqrt{\varepsilon m \varepsilon d/(\varepsilon m + \varepsilon d)}$$

dans le cas d'une couche métallique d'épaisseur infinie

avec $\varepsilon_m$ et $\varepsilon_d$ les permittivités du métal et du matériau diélectrique respectivement.

On peut définir ainsi une longueur d'onde centrale de couplage $\lambda_{0x}$ pour une observation du composant selon un angle d'incidence $\theta_0$ donné :

[Math 3]

$$\lambda_{0x} = (p_x/m)*(n_{sp} - n_d * \sin(\theta_0))$$

Dans une bande spectrale centrée sur la longueur d'onde centrale de couplage, l'énergie lumineuse incidente dans le milieu diélectrique est couplée avec le mode plasmonique, entraînant l'absorption de cette énergie dans la couche métallique. Il en résulte une modification du spectre de l'énergie lumineuse réfléchie. Le composant optique de sécurité se comporte ainsi comme un filtre coupe bande en couleur pour une radiation incidente en mode TM.

Considérons maintenant une onde incidente avec le même angle d'incidence mais une polarisation TE (onde transverse électrique, c'est-à-dire pour laquelle le champ électrique E est perpendiculaire au plan d'incidence XZ qui est le plan de la figure sur la figure 1A), et considérons le réseau de vecteur réseau $\mathbf{k_{gy}}$ (figure 1B), à 90° du vecteur réseau $\mathbf{k_{gx}}$. Une excitation plasmonique sera alors possible si l'onde incidente rempli les conditions de couplage tel que :

[Math 4]

$$k_{sp} = ((k_0 * n_d * \sin(\theta_0))^2 + (m * k_{gy})^2)^{1/2}$$

On peut alors définir une nouvelle longueur d'onde centrale de couplage $\lambda_{0y}$, indépendante de la première de par sa polarisation opposée comme :

[Math 5]

$$\lambda_{0y} = (p_y/|m|)*(n_{sp}^2 - n_d^2 * \sin^2\theta_0)^{1/2}$$

Ainsi pour une onde incidente non polarisée, une partie du rayonnement incident sera couplée avec un mode plasmonique grâce à un ensemble d'ondulations selon une direction, et une autre partie du rayonnement sera couplée à un mode plasmonique grâce à l'ensemble des ondulations selon une autre direction, résultant dans l'absorption dans la couche métallique dans une première bande spectrale résultant du couplage aux différentes longueurs d'onde de couplage précédemment décrites.

Comme décrit par ailleurs dans le brevet EP 2 695 006 au nom de la déposante, lorsque la couche métallique est d'épaisseur finie et, de plus, que son épaisseur est de l'ordre de grandeur de la profondeur de pénétration du champ électromagnétique du mode de plasmon dans le métal (qui est d'environ $1/(k_0(n_{sp}^2+Re(|\varepsilon_m|))^{1/2}))$, le champ électromagnétique du mode de plasmon à l'interface supérieure de la couche métallique « voit » aussi l'interface inférieure et doit par conséquent aussi satisfaire les conditions aux limites des champs à cette interface inférieure. Il s'ensuit qu'il existe alors deux modes de plasmon pouvant se propager le long de la couche métallique qui, tous deux, ont un maximum de champ aux interfaces supérieure et inférieure de la couche métallique: un mode de plasmon dont le champ magnétique transverse H est pair (donc le champ électrique longitudinal, responsable de l'oscillation longitudinale des électrons, impair, avec un passage par zéro dans la couche métallique), dit le mode de plasmon « long range », et un mode de plasmon dont le champ H est impair, plus fortement absorbé par le métal, dit le mode de plasmon « short range ». Leurs indices effectifs sont voisins lorsque l'épaisseur de la couche métallique n'est pas trop faible (supérieure à 15 nm, par exemple) et ces modes sont tous deux couplés en présence d'un réseau lorsque l'onde incidente émane d'une source de lumière peu cohérente spatialement et temporellement comme une lampe d'éclairage ou la lumière naturelle du soleil. Ainsi, lorsque la condition de couplage est satisfaite, le champ des deux modes de plasmons couplés (ou « excités ») possède un maximum à l'interface inférieure de la couche métallique aussi et peut donc, grâce à la présence du réseau, rayonner dans le milieu transmis (couche 116, Fig. 1A) et ainsi permettre à l'énergie lumineuse de traverser la couche métallique continue et ainsi produire un pic de transmission, d'où le terme de transmission résonnante.

Dans le composant optique de sécurité selon la présente description, l'indice effectif du plasmon (équation (2) ci-dessus) est déterminé par l'indice de réfraction $n_1$ de la première couche en matériau diélectrique bas indice 113 mais également par l'indice de réfraction $n_2$ de la deuxième couche en matériau diélectrique haut indice 114. La présence de la couche en matériau diélectrique haut indice entraîne ainsi un déplacement de la première bande spectrale par rapport à une interface simple diélectrique-métal.

Par rapport aux effets plasmoniques décrits ci-dessus, la déposante a en outre mis en évidence pour la première fois dans le domaine de la sécurité un effet supplémentaire résultant de la couche en matériau diélectrique haut indice et qui se traduit par des effets colorés originaux, notamment des angles de teinte non observés dans les composants optiques de sécurité de l'état de l'art.

Plus précisément, l'épaisseur de la deuxième couche en matériau diélectrique haut indice 114, comprise généralement entre 20 nm et 150 nm, est déterminée, en fonction notamment de la nature des matériaux et des caractéristiques du réseau de couplage, pour générer un effet de résonance plasmonique hybride, dans une deuxième bande spectrale de résonance différente de ladite première bande spectrale.

Cet effet est mis en évidence par exemple au moyen des courbes représentées sur la Fig. 2A. Les courbes montrent la réflexion normalisée $R_0$ en fonction de la longueur d'onde pour une onde incidente à incidence normale ($\theta_0$ = 0), azimut nul, lumière non polarisée, dans un composant optique de sécurité du type de la Fig. 1A, au niveau de la zone de couplage $Z_1$. La réflexion est observée du côté de la première face d'observation $100_A$. Le réseau de couplage $C_1$ est un réseau bidimensionnel avec une période de 280 nm selon chaque direction, un profil sinusoïdal avec une profondeur de 42 nm (rapport de forme de 0,15). L'indice de réfraction des couches en matériau diélectrique transparentes 113, 116 est de 1,5 et la couche métallique est une couche en aluminium de 25 nm permettant le couplage de modes de plasmon aux deux interfaces métal-diélectrique 114/115 et 115/116 ; il en résulte des effets de transmission résonante. Les courbes sont calculées respectivement dans les cas suivants : pas de couche en matériau diélectrique haut indice (courbe $21_R$), couche en matériau diélectrique haut indice (114, Fig. 1A) d'indice de réfraction 2,4 (ZnS) et d'épaisseur 30 nm (courbe $22_R$), couche en matériau diélectrique haut indice (114, Fig. 1A) d'indice de réfraction 2,4 et d'épaisseur 60 nm (courbe $23_R$), couche en matériau diélectrique haut indice (114, Fig. 1A) d'indice de réfraction 2,4 et d'épaisseur 90 nm (courbe $24_R$).

Les courbes sont calculées au moyen du logiciel commercial MC Grating Software©. Comme cela est visible sur la Fig. 2A, la courbe $21_R$ montre une première bande spectrale de résonance unique correspondant à un creux dans la courbe de réflexion normalisée référencé 210. Il s'agit d'une courbe classique de réflexion normalisée résultant d'un effet plasmonique à une interface diélectrique - métal simple. Lorsqu'on introduit une couche en matériau diélectrique haut indice (courbe $22_R$), on observe un décalage de la première bande spectrale de résonance résultant de la variation de l'indice effectif du mode plasmonique (creux 220). Lorsque la couche en matériau diélectrique haut indice est suffisamment épaisse (courbe $23_R$), on observe en plus du décalage de la première bande spectrale (creux 231), l'apparition d'un deuxième creux (232) dans la courbe de réflexion normalisée correspondant à une deuxième bande spectrale de résonance. Lorsque l'épaisseur de la couche en matériau diélectrique haut indice augme encore (courbe $24_R$), on observe en plus du décalage de la première bande spectrale (creux 241) et du deuxième creux (242) correspondant à la deuxième bande spectrale de résonance, l'apparition d'un troisième creux (243) correspondant à une troisième bande spectrale de résonance.

La déposante a montré que la deuxième bande spectrale de résonance résulte d'un mode plasmonique « hybride » dans lequel l'énergie du champ électromagnétique reste maximale à la surface du métal mais diffuse dans la couche en matériau diélectrique haut indice.

La troisième bande spectrale de résonance résulte de résonances de modes guidés dans la couche en matériau diélectrique haut indice.

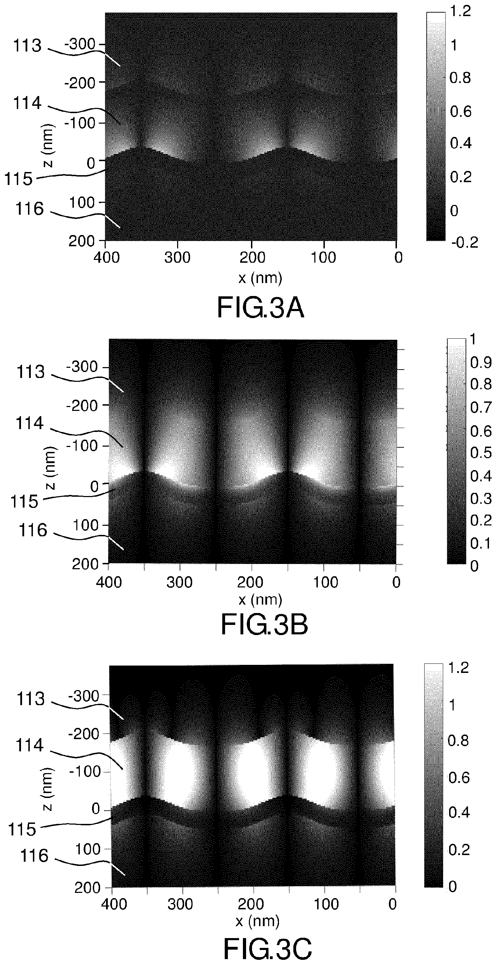

Ces effets sont mis en évidence sur les images illustrées sur les Figs 3A - 3C qui représentent l'intensité du champ électromagnétique dans la couche en matériau diélectrique haut indice à des longueurs d'onde correspondant longueurs d'onde centrales des bandes spectrales de résonance montrées respectivement par les creux 241, 242, 243 de la courbe de réflexion normalisée $24_R$, Fig. 2A.

Les Figs. 3A - 3C représentent des images du module du champ électrique déterminées en champ proche, et plus précisément la composante Ey du champ, c'est-à-dire la projection du champ électrique sur l'axe Y. les images sont calculées avec le logiciel MC Grating Software©.

Le calcul en champ proche permet de faire apparaître les caractéristiques particulières des différentes résonnances présentes dans le système. Cela permet de savoir où l'énergie du champ est concentrée. En particulier, on observe que l'énergie du mode hybride (Fig. 3B) est moins concentrée à la surface du métal que celle du mode purement plasmonique (Fig. 3A). Cela revient à dire que le mode hybride a un indice effectif plus faible que le mode plasmonique pur. Comme expliqué précédemment, le mode hybride dépend de la deuxième couche en matériau diélectrique haut indice et ne peut exister et être couplé efficacement que si l'épaisseur de la deuxième couche en matériau diélectrique haut indice est suffisamment grande.

De plus, si la deuxième couche en matériau diélectrique haut indice est très épaisse (Fig. 3C), on voit apparaitre, en plus du mode hybride, un mode guidé dans l'épaisseur de la deuxième couche en matériau diélectrique haut indice (et non pas à la surface du métal). L'indice effectif du mode guidé est encore plus faible que les indices effectifs des modes hybride et plasmonique. Il n'a pas de formules analytiques permettant de déterminer les indices effectifs des modes, mais les simulations de champs électromagnétiques réalisées par la déposante ont permis de mettre en évidence les différents modes qui apparaissent avec une épaisseur croissante de la deuxième couche en matériau diélectrique haut indice. Notamment, l'apparition de la deuxième bande spectrale de résonance permet de faire apparaître des effets colorés en réflexion et à l'ordre zéro avec des couleurs originales, présentant des angles de teinte qui ne peuvent pas être obtenus avec les structures plasmoniques de l'état de l'art.

Ainsi, supposons par exemple que l'on souhaite obtenir, en réflexion et à incidence normale, une couleur ressemblante au cyan et qui est caractérisée par deux longueurs d'onde centrales de résonance $\lambda_1 = 430$nm et $\lambda_2 = 580$ nm respectivement de deux bandes spectrales de résonance correspondant à deux creux dans la courbe de réflexion normalisée. On fait l'hypothèse d'un réseau de couplage à deux dimensions avec une maille carrée (périodes identiques selon les deux directions).

On utilise par exemple le logiciel commercial MC Grating Software© qui permet de calculer les efficacités de diffraction pour différents types de structures. Il existe d'autres logiciels qui peuvent être également utilisés comme par exemple le logiciel $S^4$ ou S4 (Stanford Stratified Structure Solver) ou le logiciel développée par la société Lumerical©. On définit le profil du réseau selon chacune des directions, par exemple au moyen d'harmoniques de Fourier. On définit ensuite deux milieux semi-infinis correspondant aux couches de matériau diélectrique bas indice 113, 116 (Fig. 1A), dont l'indice de réfraction est par exemple de 1.5. On choisit ensuite la période du réseau et l'épaisseur de la couche en matériau diélectrique haut indice (114, Fig. 1A) de sorte à ajuster les positions spectrales des résonnances plasmonique et hybride pour se rapprocher des longueurs d'ondes $\lambda_1$ et $\lambda_2$ fixées au départ. Ces positions spectrales sont déterminées à partir du calcul de l'efficacité de diffraction réfléchie à l'ordre 0. Enfin, la profondeur du réseau et l'épaisseur de la couche de métal (par exemple en aluminium) sont choisies de manière à ajuster les amplitudes de résonnance pour avoir le couplage le plus efficace possible c'est-à-dire une amplitude de creux maximale et un minimum des creux correspondant aux bades spectrales de résonnance tendant vers 0.

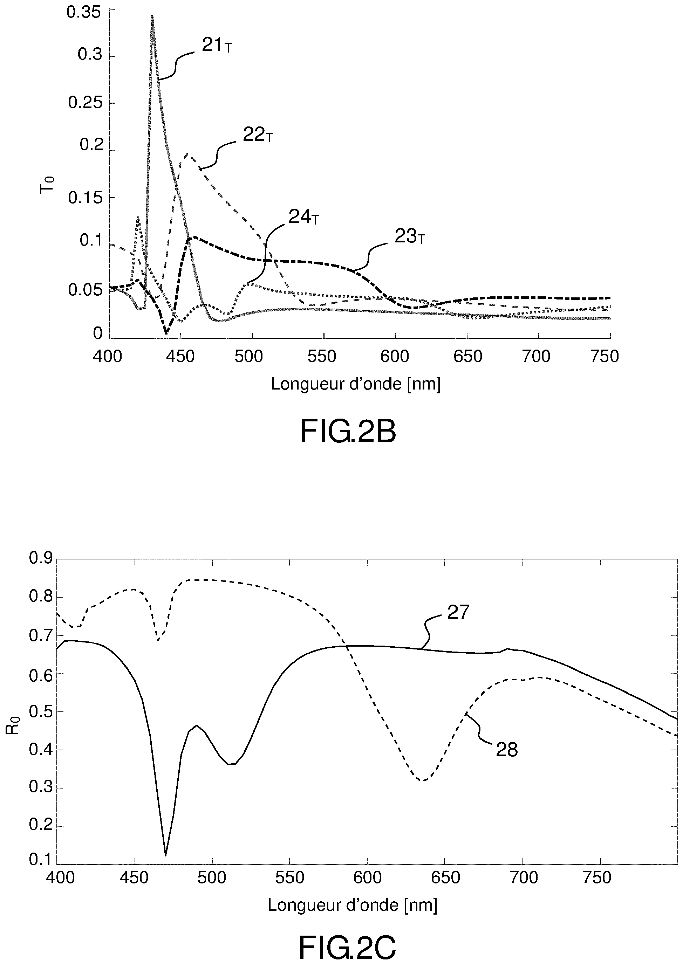

La FIG. 2B illustre des courbes montrant la transmission normalisée $T_0$ en fonction de la longueur d'onde pour une onde incidente à incidence normale ($\theta_0 = 0$), azimut nul, lumière non polarisée, dans un composant optique de sécurité du type de la Fig. 1A, au niveau de la zone de couplage $Z_1$. La transmission est observée du côté de la deuxième face d'observation $100_B$ lorsque le composant est éclairé du côté de la face $100_A$ ou du côté de la face d'observation $100_A$ lorsque le composant est éclairé du côté de la face $100_B$. Les conditions sont identiques aux conditions utilisées pour déterminer les courbes représentées sur la Fig. 2A. Les courbes $21_T$, $22_T$, $23_T$, $24_T$, correspondent respectivement aux courbes calculées sans couche en matériau diélectrique haut indice, avec une couche en matériau diélectrique haut indice d'indice de réfraction 2,4 (ZnS) et d'épaisseur 30 nm, avec une couche en matériau diélectrique haut indice d'indice de réfraction 2,4 et d'épaisseur 60 nm, avec une couche en matériau diélectrique haut indice d'indice de réfraction 2,4 et d'épaisseur 90 nm.

On observe sur ces courbes que l'ajout de la deuxième couche en matériau diélectrique haut indice a un impact également sur la transmission. On observe avec la présence due la double interface diélectrique-diélectrique-métal et une épaisseur suffisante de la deuxième couche en matériau diélectrique haut indice des couleurs transmises différentes de celles observées avec une interface diélectrique-métal simple comme dans l'art antérieur (courbe $21_T$).

La FIG. 2C illustre l'influence de la polarisation sur la réflexion normalisée. Les paramètres sont identiques à ceux utilisés pour calculer les courbes représentées sur les Figs 2A, 2B, à part que l'onde incidente est choisie polarisée (TM ou TE) et incidente avec un angle d'incidence $\theta_0 = 40°$. L'épaisseur de la couche en matériau diélectrique est de 80 nm.

Comme illustré sur la Fig. 2C, on observe une courbe de réflexion normalisée en polarisation TM (courbe 27) différente de la courbe de réflexion normalisée en polarisation TE (courbe 28). Cette dépendance en polarisation permet une authentification du composant optique de sécurité supplémentaire par rapport à une authentification à l'œil nu, en lumière naturelle.

Par exemple, on pourra prévoir une illumination du composant optique de sécurité en lumière naturelle et l'observation, à travers un polariseur, d'un changement de couleur de l'effet coloré en fonction de la direction de polarisation ; ou une illumination du composant optique de sécurité en lumière polarisée linéaire et l'observation d'un changement de couleur de l'effet coloré en fonction de la direction de la polarisation.

Dans l'exemple de la Fig. 2C, le réseau de couplage est choisi avec une maille carrée (périodes identiques selon les deux directions), aussi l'effet de la polarisation sera visible avec une incidence non nulle. Dans le cas d'une maille rectangulaire, ou plus généralement présentant des périodes différentes selon les deux directions, l'authentification pourra se faire également à incidence normale.

On pourra ainsi concevoir un composant optique de sécurité avec au moins une première double interface structurée pour présenter au moins une première zone de couplage comprenant un premier réseau de couplage avec une maille carrée et au moins une deuxième zone de couplage comprenant un deuxième réseau de couplage avec une maille rectangulaire non carrée. Dans cette configuration, un contrôle en polarisation à incidence normale permettra l'observation d'un changement de couleur avec changement de la polarisation seulement dans la deuxième zone de couplage. Il sera également possible de prévoir un double contrôle en polarisation, avec ou sans changement de couleur selon l'angle d'observation, dans la première zone de couplage.

A noter que l'authentification par analyse de la polarisation peut être fait à l'oeil nu comme décrit précédemment ou par un équipement de type une machine de contrôle automatique (type lecteur de document par exemple tels que ceux qui sont utiliser pour contrôler les passeports ou bien les billets de banque) ou tout autre équipement de contrôle intégrant une source de lumière blanche, un filtre polarisant, un capteur, une unité de traitement des données.

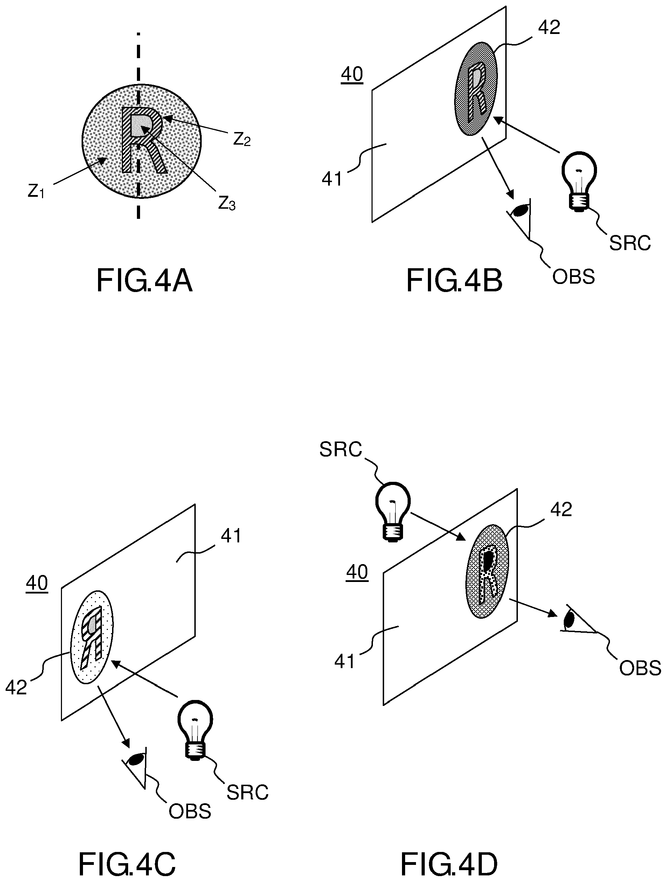

Les Figs. 4A - 4C illustrent l'authentification d'un composant optique de sécurité 42 selon un exemple de réalisation, ledit composant 42 étant agencé sur un substrat 41 d'un document sécurisé 40. L'authentification est faite à l'oeil nu, en lumière blanche non polarisée.

Le composant optique de sécurité est dans cet exemple un composant tel que décrit sur la Fig. 1A, dans lequel la double interface I présente 3 zones jointives $Z_1$,

$Z_2$, $Z_3$. La première zone $Z_1$ est structurée avec un premier réseau de couplage $C_1$, la deuxième zone $Z_2$ est structurée avec un deuxième réseau de couplage $C_2$ différent du premier réseau de couplage et la zone $Z_3$ n'est pas structurée. Les trois zones sont jointives et agencées pour former un motif reconnaissable, par exemple un « R » comme cela est montré sur la Fig. 4A. La couche de métal 115 est supposée suffisamment fine pour permettre un effet de transmission résonante, comme illustré sur la Fig. 2B.

Les Figs. 4B, 4C et 4D montrent l'observation respectivement en réflexion selon la première face d'observation $100_A$, en réflexion selon la deuxième face d'observation $100_B$, opposée à la première face d'observation, et en transmission. Sur les figures, la position de la source d'éclairage est référencée SRC et la position de l'observateur par rapport à la source d'éclairage est symbolisée par un oeil OBS.

Du côté de la face principale d'observation (face $100_A$, Fig. 1A), on observe comme cela est schématisé sur la Fig. 4B deux couleurs différentes correspondant respectivement aux zones de couplage $Z_1$ et $Z_2$. Dans ces zones de couplage, les couches bas indice, haut indice, métal et les réseaux de couplage sont déterminés pour obtenir des modes plasmoniques hybrides dans des bandes spectrales de résonances distinctes. On observe ainsi des couleurs en réflexion dans les zones $Z_1$ et $Z_2$ originales et intenses, avec des angles de teinte différenciés.

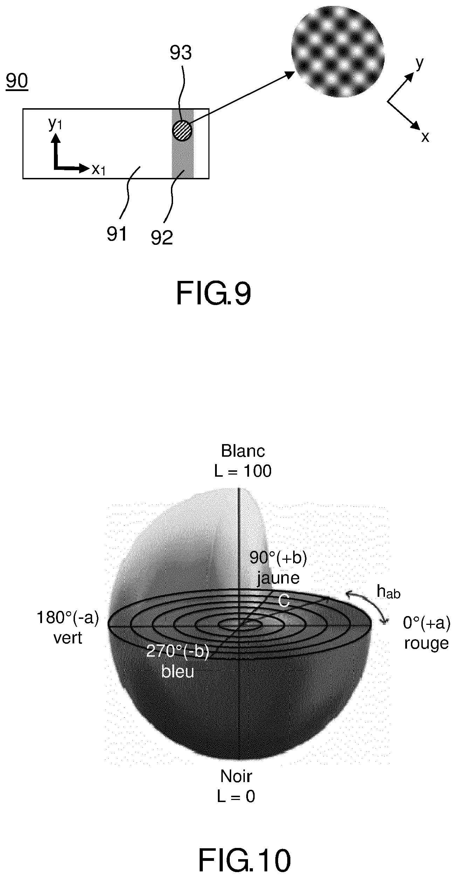

A titre de rappel, la Fig. 10 montre un schéma illustrant la sphère CIE Lab adoptée par le Comité International de l'Eclairage (CIE) en 1976 et défini selon la norme ISO 11664-4. L'angle de teinte $h_{ab}$ indique la couleur ; il évolue du rouge (angle 0°) vers le jaune (90°) puis vers le vert (180°) puis vers le bleu (270°). Sur la sphère, la luminance L est indiquée en ordonnée, les couleurs évoluant du plus clair (L = 100) au plus foncé (L = 0). La distance C déterminée à partir du centre de la sphère indique la chroma (ou saturation) et est égale à :

[Math 6]

$$C = \sqrt{a^2 + b^2}.$$

En pratique, la déposante a montré la possibilité d'obtenir des couleurs au moyen du composant optique de sécurité avec tous les angles de teinte et notamment des angles de teinte entre 120° et 320°, c'est-à-dire entre le vert et le violet, en passant par des nuances de bleu proches du cyan, couleurs qui n'étaient pas obtenues avec les composants plasmoniques de l'état de l'art.

Comme montré sur la Fig. 4B, la zone $Z_3$ apparaitra réfléchissante car non structurée. Il est remarquable de noter que les 3 zones $Z_1$, $Z_2$ et $Z_3$ et les effets visuels correspondant pourront être repérées très précisément (jonctions entre les zones référencées 118 sur la Fig. 1A) du fait que ces effets colorés résultent des structures des différents zones et non du dépôt local d'une couche additionnelle d'un matériau (par exemple pigment ou colorant). En effet, le dépôt local d'une couche additionnelle, par exemple par impression, requiert de prévoir une distance minimale entre deux régions de couleurs différentes.

Il sera alors possible de former des images multicolores, par exemple des images formées de pixels, chaque pixel correspondant a une zone et présentant par exemple des dimensions inférieures à 300 $\mu$m et non visibles à l'oeil nu ou, au contraire, des zones plus grandes identifiables à l'oeil nu, comme dans l'exemple des Figs. 4A - 4C.

La Fig. 4C schématise le même document sécurisé au moyen du même composant optique de sécurité 42 mais vu en réflexion du côté de la deuxième face d'observation $100_B$. Vu de ce côté, l'effet coloré résulte d'un effet plasmonique à l'interface simple diélectrique métal (115/116, Fig. 1A). Les couleurs observées dans les zones de couplage $Z_1$, $Z_2$ sont donc différentes de celles observées selon la face principale d'observation $100_A$. A nouveau, la zone $Z_3$ apparaît réfléchissante car non structurée.

La Fig. 4D schématise le même document sécurisé au moyen du même composant optique de sécurité 42 mais vu en transmission. Les effets colorés dans les zones $Z_1$, $Z_2$ résultent d'un effet de transmission résonante comme illustrées au moyen des courbes de la Fig. 2B. La zone $Z_3$ apparait noire, non transparente, car non structurée. A noter que lorsqu'on utilise une couche métallique fine comme c'est le cas dans l'exemple des Figs. 4B - 4D pour observer un effet de transmission résonante, l'effet en réflexion est sensiblement le même que l'effet en réflexion dans le cas où l'on aurait utilisé une couche métallique épaisse. Notamment, la teinte ne change pas mais on modifie la luminance, c'est-à-dire le côté clair ou sombre de la couleur.

Comme précédemment expliqué, l'homme du métier pourra utiliser les logiciels connus pour déterminer les caractéristiques de la structure (choix des matériaux, épaisseurs des couches, paramètres du réseau ou des réseaux de couplage dans les différentes zones) afin de choisir les effets colorés voulus.

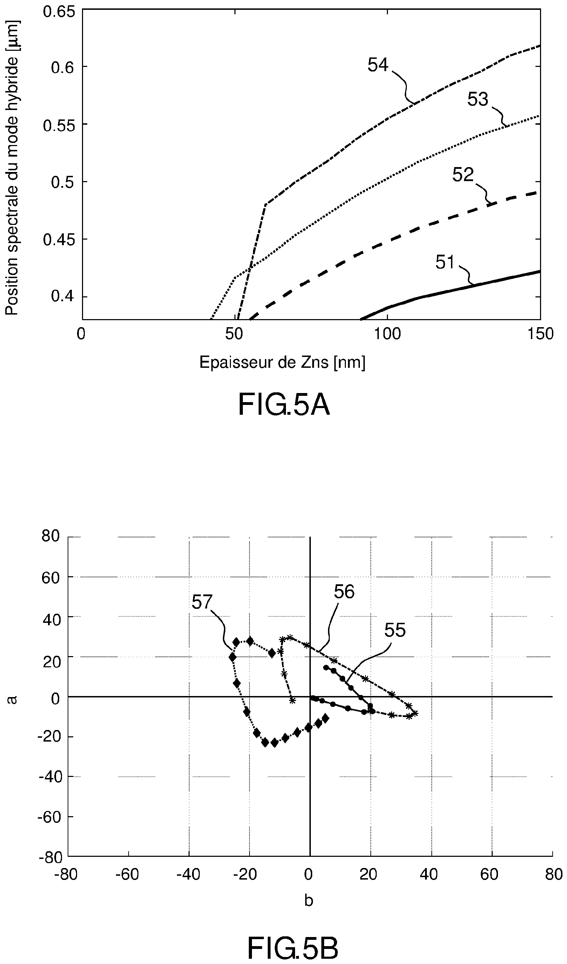

La Fig. 5A représente un schéma illustrant des courbes montrant la position spectrale du mode hybride en fonction de l'épaisseur de la deuxième couche en matériau diélectrique (haut indice), dans le cas d'un réseau de couplage présentant une maille carrée et pour différentes valeurs de la période, dans un exemple de composant optique de sécurité selon la présente description. L'observation est faite en réflexion, à incidence normale.

Pour le calcul de ces courbes, le matériau chois est du ZnS (indice de réfraction 2,4), la couche de métal est une couche en aluminium d'épaisseur 25 nm, les couches en matériau bas indice (113, 116, Fig. 1A) ont un indice de réfraction de 1,5, le réseau de couplage présente un profil sinusoïdal selon chacune des directions un rapport de forme constant égal à 0,15, une maille carrée avec une période selon chaque direction de 200 nm (courbe 51), 240 nm (courbe 52), 280 nm (courbe 53), 320 nm (courbe 54).

Comme cela est visible sur les différentes courbes, le choix de la période, pour différentes valeurs de l'épaisseur de la couche en matériau diélectrique haut indice (114, Fig. 1A) permet d'influencer sur la position spectrale du mode hybride (creux de la réflexion normalisées). On observe dans cet exemple qu'une épaisseur minimale de 45 nm de ZnS est requise pour observer le mode hybride.

La Fig. 5B représente un schéma illustrant les couleurs que l'on peut obtenir (représentation ab, voir Fig. 10), en faisant varier la période du réseau de couplage entre 220 nm et 350 nm, dans le même exemple de composant optique de sécurité que celui utilisé pour la Fig. 5A, pour une épaisseur de ZnS de 60 nm (courbe 57). Cette courbe est comparée à une courbe obtenue sans ZnS (courbe 55) et avec une épaisseur de ZnS de 20 nm (courbe 56).

Comme cela est visible sur la Fig. 5B, les angles de teinte que l'on peut obtenir avec un composant optique de sécurité selon la présente description (courbe 57) dans lequel est présent le mode plasmonique hybride sont différents de ceux obtenus avec un composant optique de sécurité selon l'état de l'art (courbe 55) ou avec un composant optique de sécurité dans lequel l'épaisseur de couche haut indice est trop faible pour obtenir le mode hybride (courbe 56).

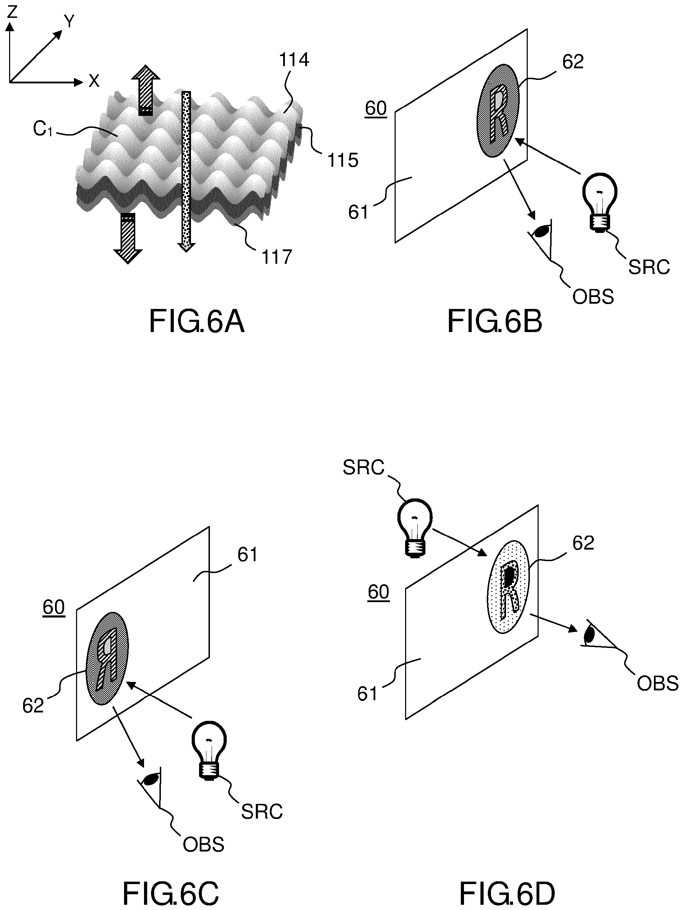

Dans les exemples décrits au moyen des figures précédentes, le composant optique de sécurité présente une seule première double interface diélectrique-diélectrique -métal. Dans d'autres exemples de réalisation, le composant optique de sécurité présente une deuxième double interface diélectrique-diélectrique -métal, comme illustré selon une vue partielle en 3D sur la Fig. 6A.

Dans cet exemple, le composant optique de sécurité comprend en plus des couches en matériau diélectrique 113, 114, 116 déjà décrites, une quatrième couche en matériau diélectrique 117, en contact avec la couche métallique 115 du côté opposé au côté en contact avec la deuxième couche en matériau diélectrique 114. Dans cet exemple, la troisième couche en matériau diélectrique 116 (non représentée sur la Fig. 6A) est en contact avec ladite couche en matériau diélectrique 117. Par exemple, la troisième couche en matériau diélectrique 116 présente un troisième indice de réfraction $n_3$ et la quatrième couche en matériau diélectrique 117 présente un quatrième indice de réfraction $n_4$ de telle sorte que la différence d'indice entre $n_4$ et $n_3$ soit supérieure à 0,5. La troisième couche en matériau diélectrique 116 forme alors une deuxième couche « bas indice » et la quatrième couche en matériau diélectrique 117 forme une deuxième couche « haut indice ».

Dans cet exemple, il est possible en choisissant notamment l'épaisseur de la quatrième couche en matériau diélectrique 117 « haut indice » d'obtenir également selon une deuxième face d'observation ($100_B$, Fig. 1A) opposée à la première face d'observation ($100_A$, Fig. 1A) un effet de résonance plasmonique hybride comme décrit précédemment et par conséquent des effets colorés remarquable.

La Fig. 6B représente ainsi un schéma illustrant un premier effet coloré visible en réflexion, selon la première face d'observation, avec un composant optique de sécurité 62 agencé sur un substrat 61 d'un document sécurisé 60, le composant optique de sécurité présentant une première et une deuxième double-interfaces, dans lequel les doubles interfaces sont structurées selon le même motif que celui illustré sur la Fig. 4A. Comme précédemment, on suppose la couche métallique suffisamment fine pour observer des effets de résonance plasmonique en transmission.

Ainsi, comme illustré sur la Fig. 6B, du côté de la face principale d'observation (face $100_A$, Fig. 1A), on observe deux couleurs différentes correspondant respectivement aux zones de couplage $Z_1$ et $Z_2$. Dans ces zones de couplage, la couche bas indice (113, Fig. 1A), haut indice (114), métal (115) et les réseaux de couplage sont déterminés pour obtenir des modes plasmoniques hybrides dans des bandes spectrales de résonances distinctes. On observe ainsi des couleurs en réflexion dans les zones $Z_1$ et $Z_2$ originales et intenses, avec des angles de teinte différenciés. Comme précédemment, la zone $Z_3$ apparaitra réfléchissante car non structurée.

La Fig. 6C schématise le même document sécurisé au moyen du même composant optique de sécurité 62 mais vu en réflexion du côté de la deuxième face d'observation $100_B$ (verso). Vu de ce côté, dans cet exemple, l'effet coloré est identique à celui observé du côté de la face principale d'observation (recto) car par exemple on aura choisi des épaisseurs et indices des couches diélectriques haut indice 114, 117 identiques. Cependant, il est également possible de choisir des couches diélectriques haut indice 114, 117 différentes, auquel cas les couleurs observées dans les zones de couplage $Z_1$, $Z_2$ seront différentes de celles observées selon la face principale d'observation100a. par contre, la zone $Z_3$ non structurée apparait toujours réfléchissante, non colorée.

La Fig. 6D schématise le même document sécurisé au moyen du même composant optique de sécurité 62 mais vu en transmission. Les effets colorés dans les zones $Z_1$, $Z_2$ résultent d'un effet de transmission résonante comme illustrées au moyen des courbes de la Fig. 2B mais influencées par la deuxième couche haut indice 117. La zone $Z_3$ apparait noire, non transparente, car non structurée.

Comme expliqué précédemment, il est possible également de choisir pour ledit au moins un premier réseau de couplage, un réseau de couplage présentant des périodes différentes dans chacune des directions.

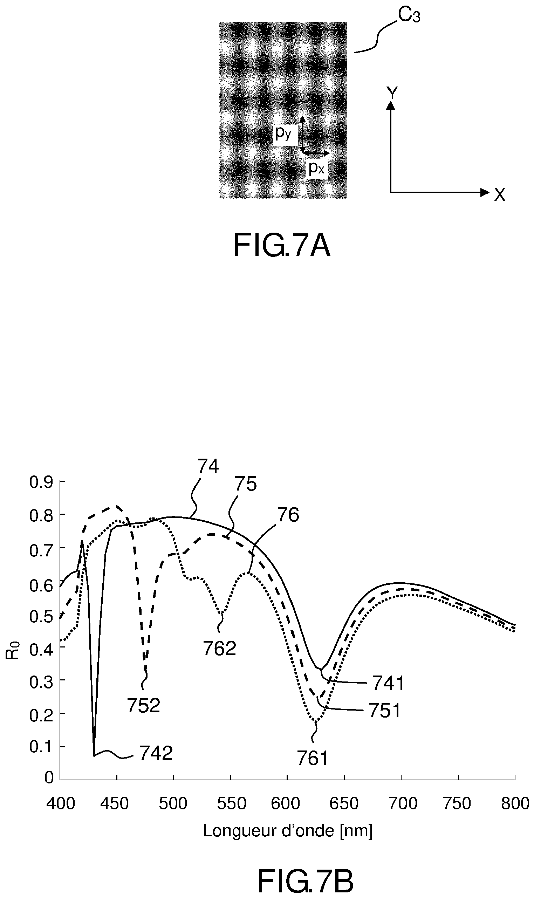

La Fig. 7A représente ainsi un schéma illustrant en vue de dessus un réseau de couplage $C_3$ avec des périodes $p_x$, $p_y$ différentes selon les première et deuxième directions X, Y, dans un exemple d'un composant optique de sécurité selon la présente description. Dans l'exemple de la Fig. 7A, les directions sont perpendiculaires l'une par rapport à l'autre, mais il est également possible d'avoir deux directions qui présentent entre elles un angle différent de l'angle droit, par exemple un angle compris entre 30° et 60°.

La Fig. 7B représente un schéma illustrant des courbes montrant la réflexion normalisée $R_0$ en fonction de la longueur d'onde, en incidence normale, selon la face principale d'observation (recto) pour une double interface structurée avec un réseau de couplage à deux dimensions comprenant une valeur donnée de la période du réseau de couplage selon une direction ($p_x = 280$ nm) et différentes valeurs de période $p_y$ selon l'autre direction. L'axe X est dans cet exemple compris dans le plan d'incidence et l'axe Y perpendiculaire au plan d'incidence. Les courbes sont calculées avec un réseau à deux dimensions du type de celui représenté sur la Fig. 7A, présentant un profil sinusoïdal selon chacune des directions, un facteur de forme (profondeur sur période) selon l'axe Y égal à 0,15. La double interface comprend une couche métallique en aluminium, d'épaisseur 25 nm et une couche en matériau diélectrique haut indice en ZnS (indice de réfraction 2,4) d'épaisseur 80 nm. Les couches bas indice 113, 116 (Fig. 1A) présentent un indice de réfraction de 1,5. Plus précisément, les courbes 74, 75, 76 sont calculées respectivement avec une période $p_y = 240$ nm (courbe 74), $p_y = 280$ nm (courbe 75), $p_y = 320$ nm (courbe 76).

Il est remarquable de noter sur ces courbes que le creux dans la courbe de réflexion normalisée correspondant à la première bande spectrale (creux aux longueurs d'onde plus élevées respectivement référencées 741, 751, 761) et résultant de l'effet de résonance plasmonique est constant avec la période $p_y$ tandis que le creux dans la courbe de réflexion normalisée correspondant à la deuxième bande spectrale (creux aux longueurs d'onde plus faibles respectivement référencées 742, 752, 762) et résultant de l'effet de résonance plasmonique hybride varie avec la période $p_y$.

Ces courbes mettent en évidence, la dépendance du mode hybride à la période $p_y$. il est ainsi possible d'obtenir des couleurs non atteignables avec une maille carrée (bien évidemment si on est dans le cas où l'épaisseur de la couche haut indice permet d'exciter le mode hybride).

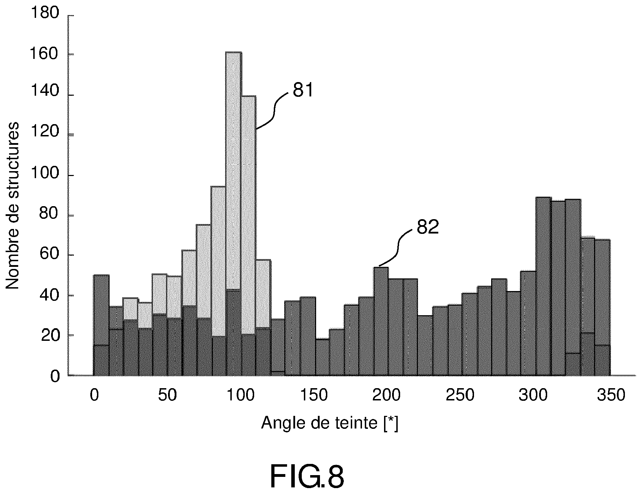

La FIG. 8 représente un schéma illustrant un histogramme des angles de teinte dans un composant optique de sécurité selon la présente description (histogramme 82), et dans un composant optique de sécurité selon l'état de l'art (histogramme 81).

Plus précisément, l'histogramme 82 montre l'occurrence de structures pour chaque angle de teinte entre 0° et 350° dans une structure du type de celle représentée sur la Fig. 1A (réseau de couplage bidimensionnel à maille carrée). Plus précisément, l'histogramme 82 est obtenu en faisant varier la période entre 230 nm et 300 nm, la profondeur du réseau entre 40 nm et 120 nm, l'épaisseur de la couche métallique (en aluminium) entre 10 nm et 35 nm et la couche en matériau diélectrique haut indice entre 50 et 140 nm. Le profil du réseau est sinusoïdal selon chacune des directions, l'indice de réfraction de la couche en matériau diélectrique bas indice est de 1,5 et l'indice de réfraction de la couche en matériau diélectrique haut indice est de 2,4.

A titre de comparaison, l'histogramme 81 montre l'occurrence de structures pour chaque angle de teinte dans une structure similaire à celle utilisée pour obtenir l'histogramme 81 mais dans laquelle l'épaisseur de la couche diélectrique haut indice est comprise entre 0 et 40 nm. Les autres paramètres varient de la même manière que pour l'histogramme 82.

Sur l'histogramme 81 (état de l'art), on observe uniquement des angles de teinte compris ont 0-120° et 320-350°. Par contre, sur l'histogramme 82 obtenu avec un composant optique de sécurité selon la présente description, on observe une distribution uniforme des angles de teintes, en particulier on voit que certaines structures ont permis d'obtenir des angles de teinte entre 120° et 320°.

Un procédé de fabrication de composants optiques de sécurité selon la présente description comprend avantageusement les étapes suivantes.

La structure optique formée dudit au moins un premier réseau de couplage ou d'une structure microscopique modulée par ledit au moins un premier réseau de couplage est enregistrée par photolithographie ou lithographie par faisceau d'électrons sur un support photosensible (ou « photorésist » selon l'expression anglosaxonne). Une étape de galvanoplastie permet de reporter la structure optique dans un matériau résistant par exemple à base de Nickel pour réaliser une matrice ou « master » métallique comportant la structure optique. La fabrication du composant optique de sécurité comprend alors une étape de réplication. Par exemple la réplication peut être réalisée par estampage (par pressage à chaud du matériau diélectrique en anglais « hot embossing ») de la première couche 113 (Fig. 1A) en matériau diélectrique d'indice de réfraction $n_1$ (couche de bas indice), typiquement un vernis d'estampage de quelques microns d'épaisseur. La couche 113 est avantageusement portée par le film support 111, par exemple un film de 12 $\mu$m à 100 $\mu$m en matériau polymère, par exemple en PET (polyéthylène téréphtalate). La réplication peut également être faite par moulage de la couche de vernis d'estampage avant séchage puis réticulation UV («UV casting»). La réplication par réticulation UV permet notamment de reproduire des structures présentant une grande amplitude de profondeur et permet d'obtenir une meilleure fidélité dans la réplication. De manière générale, toute autre méthode de réplication de haute résolution connue de l'art antérieur peut être utilisée dans l'étape de réplication. Vient ensuite le dépôt sur la couche ainsi embossée de l'ensemble des autres couches, notamment la deuxième couche en matériau diélectrique 114 (couche haut indice), la couche métallique 115, et les autres couches éventuelles, dont par exemple la couche de protection 116.

Comme cela apparaît au vu de l'exemple de procédé de fabrication décrit ci-dessus, l'inclusion d'un composant optique de sécurité selon la présente description dans un document sécurisé est parfaitement compatible avec la présence dans le même document de structures à base de réseaux habituellement utilisées pour la réalisation de composants holographiques. Notamment, il sera possible de réaliser un élément optique de sécurité comprenant un ou plusieurs composants de type plasmonique tels que décrits précédemment et un ou plusieurs autres types de composants optiques de sécurité connus de l'état de l'art, par exemple de type holographique.

Pour cela une matrice pourra être réalisée par enregistrement des différents motifs correspondants aux différents composants optiques de sécurité sur le support photorésist, cette étape étant suivie d'une étape de galvanoplastie. L'estampage peut ensuite être réalisé à partir de la matrice pour transférer les différentes microstructures sur le film en matériau polymère, destiné à l'embossage. La couche métallique et/ou la couche en matériau diélectrique haut indice dont les épaisseurs sont contrôlées pour les composants optiques de sécurité à effet plasmonique selon la présente description pourront être déposées sur l'ensemble du film, ou de façon sélective au niveau du composant optique de sécurité selon la présente description. Le dépôt sélectif des couches réfléchissantes (métal et haut indice) permet par exemple de mettre davantage en évidence les effets optiques desdits composants selon la présente description et/ou de faire apparaître le substrat du document ou de l'objet à sécuriser sous forme de motifs non réfléchissants. La métallisation sélective (respectivement dépôt sélectif de la couche haut indice) peut être obtenue par une première étape de dépôt d'une couche métallique (respectivement couche haut indice) sur l'ensemble du film structuré puis par démétallisation partielle (respectivement retrait partiel de la couche haut indice) pour former lesdites zones non métallisées (respectivement sans couche haut indice).

La Fig. 9 représente un document sécurisé 90, par exemple un document de valeur de type billet de banque, ainsi équipé d'un élément de sécurité 92 comprenant un composant optique de sécurité 93 selon la présente description.

L'élément de sécurité 92 se présente sous forme d'une bande, typiquement de largeur 15 mm qui vient se fixer sur un substrat 91 du document 90. L'élément de sécurité 92 est fixé au substrat par des moyens connus. Par exemple, l'élément de sécurité peut être fixé par transfert à chaud réactivant une couche adhésive transparente préalablement appliquée sur la couche de protection 116. Dans ce cas, une couche de détachement 112 (par exemple une cire) peut être appliquée entre le vernis d'estampage 113 et le film support en PET 111 (Fig. 1A). On transfert l'élément de sécurité sur le document en pressant à chaud l'élément de sécurité sur le document, le composant plasmonique se trouvant face à la zone transparente. Pendant le transfert, le film adhésif colle sur le substrat 91 du document et la couche de détachement ainsi que le film support peuvent être retirés. Dans le substrat 91, une fenêtre de transparence peut être prévue au niveau du composant de type plasmonique selon la présente description si celui-ci est prévu pour être visible en transmission. A noter que si la fenêtre de transparence correspond à un substrat transparent, alors le film support peut être effectivement retiré, comme décrit précédemment. Si la fenêtre de transparence correspond un trou dans le papier, alors l'élément de sécurité est collé et le film support conservé.

Le document sécurisé ainsi obtenu est très facilement contrôlable à l'oeil nu, en lumière blanche, par un utilisateur peu expérimenté, et avec une grande fiabilité. Une authentification visuelle du document sécurisé est donc possible, y compris en lumière naturelle. Cette authentification, basée sur des effets visuels en réflexion et éventuellement en transmission, est particulièrement facile à réaliser.

Du fait de la dépendance des effets décrits avec la polarisation, une authentification est également possible en éclairant le composant optique de sécurité en lumière polarisée linéairement, ou en éclairant le composant optique de sécurité en lumière naturelle et en l'observant à travers un polariseur linéaire. Le changement de polarisation fera apparaître un changement de couleur, comme expliqué ci-dessus en référence à la Fig. 2C.

Un contrôle machine est également possible, par exemple un contrôle par smartphone. En effet, du fait des angles de teinte très différents que l'on peut obtenir au moyen du composant optique de sécurité, il sera possible par exemple de déterminer si l'écart angulaire entre deux angles de teinte correspondant à deux zones de couplage est respecté. Bien que décrite à travers un certain nombre d'exemples de réalisation, le composant optique de sécurité selon la présente description comprend différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique de sécurité (101) à effet plasmonique, ledit composant pouvant être contrôlé à l'œil nu, en réflexion, selon au moins une première face d'observation ($100_A$), et comprenant :

    - au moins une première couche en matériau diélectrique (113), transparente, présentant un premier indice de réfraction ($n_1$),
    - au moins une deuxième couche en matériau diélectrique (114), transparente, présentant un deuxième indice de réfraction et ladite deuxième couche en matériau diélectrique étant en contact avec ladite première couche en matériau diélectrique;
    - une couche métallique (115) en contact avec ladite au moins une deuxième couche en matériau diélectrique; dans lequel :
    - ladite première couche en matériau diélectrique, ladite deuxième couche en matériau diélectrique et ladite couche métallique forment une première double interface (I) diélectrique-diélectrique-métal, comprenant une première interface diélectrique-diélectrique et une première interface diélectrique-métal, et structurée pour former, dans au moins une première zone de couplage ($Z_1$), un premier réseau de couplage ($C_1$) à deux dimensions, avec une première direction (X) et une deuxième direction (Y), présentant une première période ($p_x$) comprise entre 150 nm et 350 nm selon la première direction et une deuxième période ($p_y$) comprise entre 150 nm et 350 nm selon la deuxième direction,
    - ledit premier réseau de couplage ($C_1$) est déterminé pour générer un premier effet de résonance plasmonique à ladite au moins une première interface diélectrique-métal dans une première bande spectrale de résonance, ledit composant optique de sécurité étant **caractérisé en ce que** :
    - l'épaisseur de ladite au moins une deuxième couche de matériau diélectrique est comprise entre 20 nm et 150 nm,
    - la différence entre le deuxième indice de réfraction et le premier indice de réfraction est supérieure ou égale à 0,5, et **en ce que**
    - l'épaisseur de ladite au moins une deuxième couche en matériau diélectrique est déterminée pour générer, au moyen dudit premier réseau de couplage ($C_1$), un effet de résonance plasmonique hybride, dans une deuxième bande spectrale de résonance différente de ladite première bande spectrale.

2. Composant optique de sécurité selon la revendication 1, comprenant en outre une troisième couche en matériau diélectrique (116), transparente, en contact avec ladite couche métallique (115) pour former une deuxième interface diélectrique-métal, ladite deuxième interface diélectrique-métal étant structurée dans ladite au moins une première zone de couplage selon ledit premier réseau de couplage.

3. Composant optique de sécurité selon la revendication 1, comprenant en outre une troisième couche en matériau diélectrique (116), transparente, présentant un troisième indice de réfraction ($n_3$) et une quatrième couche en matériau diélectrique (117), transparente, d'épaisseur comprise entre 20 nm et 150 nm, présentant un quatrième indice de réfraction ($n_4$), la différence entre le quatrième indice de réfraction et le troisième indice de réfraction étant supérieure ou égale à 0,5, et dans lequel :

    - ladite quatrième couche en matériau diélectrique (117) est en contact avec la couche métallique (115) et ladite troisième couche en matériau diélectrique (116) est en contact avec ladite quatrième couche en matériau diélectrique (117) ; et

    - ladite troisième couche en matériau diélectrique, ladite quatrième couche en matériau diélectrique et ladite couche métallique forment une deuxième double interface diélectrique-diélectrique-métal, comprenant une deuxième interface diélectrique-diélectrique et une deuxième interface diélectrique-métal, et structurée, dans ladite au moins une première zone de couplage, selon le premier réseau de couplage ($C_1$).

**4.** Composant optique de sécurité selon l'une quelconque des revendications 2 ou 3, dans lequel la couche métallique est suffisamment fine pour permettre le couplage de modes de plasmon de surface supportés par ladite première interface diélectrique-métal et ladite deuxième interface diélectrique-métal de part et d'autre de la couche métallique (115), résultant en un effet de transmission résonante.

**5.** Composant optique de sécurité selon l'une quelconque des revendications précédentes, dans lequel ledit au moins un premier réseau de couplage est dissymétrique.

**6.** Composant optique de sécurité selon l'une quelconque des revendications précédentes, dans lequel ladite première période et ladite deuxième période dudit au moins un premier réseau de couplage sont différentes.

**7.** Composant optique de sécurité selon l'une quelconque des revendications précédentes, dans lequel ladite au moins une première double interface diélectrique-diélectrique-métal est structurée pour former dans au moins une deuxième zone, une structure différente dudit premier réseau de couplage, ladite au moins une première double interface étant continue sur l'ensemble desdites zones.

**8.** Composant optique de sécurité selon la revendication 7, dans lequel ladite structure de ladite au moins une deuxième zone ($Z_2$) comprend un deuxième réseau de couplage ($C_2$), différent du premier réseau de couplage.

**9.** Composant optique de sécurité selon l'une quelconque des revendications des revendications 7 ou 8, dans lequel le composant optique de sécurité présente, en réflexion selon ladite première face d'observation et selon un angle d'observation donné, un premier effet coloré avec un premier angle de teinte dans la première zone de couplage et un deuxième effet coloré avec un deuxième angle de teinte dans ladite deuxième zone, le deuxième angle de teinte étant différent du premier angle de teinte d'une valeur au moins égale à 20°.

**10.** Composant optique de sécurité selon l'une quelconque des revendications précédentes, dans lequel ladite au moins une première double interface diélectrique-diélectrique-métal n'est pas structurée dans au moins une zone ($Z_3$) jointive avec ladite première zone de couplage, ladite au moins une première double interface étant continue sur l'ensemble desdites zones.

**11.** Composant optique de sécurité selon l'une quelconque des revendications précédentes, dans lequel ladite au moins une première double interface diélectrique-diélectrique-métal est structurée pour former une pluralité de zones jointives, dont ladite première zone de couplage, ladite au moins une première double interface étant continue sur l'ensemble desdites zones.

**12.** Composant optique de sécurité selon la revendication 11, dans lequel l'ensemble desdites zones de la pluralité de zones forment un motif reconnaissable.

**13.** Composant optique de sécurité selon l'une quelconque des revendications précédentes, dans lequel ladite au moins une première double interface diélectrique-diélectrique-métal est structurée pour former, dans ladite au moins une première zone de couplage, une première structure diffractive modulée par ledit premier réseau de couplage (C1).

**14.** Elément optique de sécurité destiné à la sécurisation d'un objet, par exemple un document de valeur, comprenant au moins un composant optique de sécurité selon l'une quelconque des revendications précédentes.

**15.** Objet sécurisé, par exemple document de valeur sécurisé, comprenant un substrat (91) et un élément optique de sécurité (92) selon la revendication 14 ou un composant optique de sécurité selon l'une quelconque des revendications 1 à 13, déposé sur ledit substrat.

**16.** Objet sécurisé selon la revendication 15, dans lequel le substrat présente une forme rectangulaire avec deux axes perpendiculaires, les axes étant non colinéaires aux directions dudit au moins un premier réseau de couplage du composant optique de sécurité.

17. Objet sécurisé selon la revendication 15, dans lequel le substrat présente une forme rectangulaire avec deux axes perpendiculaires, les axes étant colinéaires aux directions dudit au moins un premier réseau de couplage du composant optique de sécurité.

18. Procédé de fabrication d'un composant optique de sécurité selon l'une quelconque des revendications 1 à 13 comprenant :

   - la formation de ladite première couche (113) en matériau diélectrique ;
   - le dépôt sur ladite première couche en matériau diélectrique de ladite deuxième couche (114) en matériau diélectrique;
   - le dépôt sur ladite deuxième couche en matériau diélectrique de ladite couche métallique (115), pour former ladite première double interface diélectrique-diélectrique-métal, ladite première double interface diélectrique-diélectrique-métal étant structurée pour former, dans ladite au moins première zone de couplage, ledit pre-mier réseau de couplage ($C_1$).

19. Procédé d'authentification d'un composant optique de sécurité selon l'une quelconque des revendications 1 à 13 comprenant :

   - une étape d'illumination dudit composant optique de sécurité en lumière naturelle et l'observation, à travers un polariseur linéaire, d'un changement de couleur de l'effet coloré en fonction de la direction de polarisation; ou
   - une étape d'illumination dudit composant optique de sécurité en lumière polarisée linéaire et l'observation d'un changement de couleur de l'effet coloré en fonction de la direction de la polarisation.

**Patentansprüche**

1. Optische Sicherheitsvorrichtung (101) mit plasmonischem Effekt, wobei die Vorrichtung mit bloßem Auge mit Hilfe der Reflexion gemäß mindestens einer ersten Beobachtungsfläche (100A) überprüft werden kann, aufweisend:

   - mindestens eine erste Schicht aus dielektrischem Material (113), die transparent ist und einen ersten Brechungsindex ($n_1$) aufweist,
   - mindestens eine zweite Schicht aus dielektrischem Material (114), die transparent ist und einen zweiten Brechungsindex aufweist, wobei die zweite Schicht aus dielektrischem Material in Kontakt mit der ersten Schicht aus dielektrischem Material steht;
   - eine Metallschicht (115), die mit der mindestens einen zweiten Schicht aus dielektrischem Material in Kontakt steht; wobei:
   - die erste Schicht aus dielektrischem Material, die zweite Schicht aus dielektrischem Material und die Metallschicht eine erste dielektrisch-dielektrisch-Metall-Doppelgrenzschicht (I) bilden, die eine erste dielektrisch-dielektrische Grenzfläche und eine erste dielektrisch-metallische Grenzfläche aufweist und so strukturiert ist, dass sie in mindestens einem ersten Kopp-lungsbereich ($Z_1$) ein erstes zweidimensionales Kopplungsgitter ($C_1$) mit einer ersten Richtung (X) und einer zweiten Richtung (Y) bildet, das eine erste Periode ($p_x$) gemäß der ersten Rich-tung im Bereich von 150 nm bis 350 nm und eine zweite Periode ($p_y$) gemäß der zweiten Richtung im Bereich von 150 nm bis 350 nm aufweist,
   - das erste Kopplungsgitter ($C_1$) bestimmt ist, um einen ersten Plasmonenresonanzeffekt an der mindestens einen ersten dielektrisch-metallischen Grenzfläche in einem ersten Spektralband der Resonanz zu erzeugen, wobei die op-tische Sicherheitsvorrichtung **dadurch ge-kennzeichnet ist, dass**:

      - die Dicke der mindestens einen zweiten Schicht aus dielektrischem Material zwischen 20 nm und 150 nm ist,
      - die Differenz zwischen dem zweiten Bre-chungsindex und dem ersten Brechungsin-dex größer oder gleich 0,5 ist, und dass

   - die Dicke der mindestens einen zweiten Schicht aus dielektrischem Material bestimmt wird, um mit Hilfe des ersten Kopplungsgitters ($C_1$) einen hybriden Plasmonenresonanzeffekt in einem zweiten Spektralband zu erzeugen, das sich von dem ersten Spektralband unterscheidet.

2. Optische Sicherheitsvorrichtung nach Anspruch 1, die ferner eine dritte Schicht aus dielektrischem Material (116) aufweist, die transparent ist und mit der Metallschicht (115) in Kontakt steht, um eine zweite dielektrisch-metallische Grenzfläche zu bilden, wobei die zweite dielektrisch-metallische Grenzfläche in dem mindestens einen ersten Kopplungsbereich gemäß dem ersten Kopplungsgitter strukturiert ist.

3. Optische Sicherheitsvorrichtung nach Anspruch 1, die ferner eine transparente dritte Schicht aus dielektrischem Material (116) mit einem dritten Bre-chungsindex ($n_3$) und eine transparente vierte Schicht aus dielektrischem Material (117) mit einer Dicke zwischen 20 nm und 150 nm mit einem vierten Brechungsindex (n4) aufweist, wobei die Differenz zwischen dem vierten Brechungsindex und dem dritten Brechungsindex größer oder gleich 0,5 ist, und wobei:

- die vierte Schicht aus dielektrischem Material (117) in Kontakt mit der Metallschicht (115) ist und die dritte Schicht aus dielektrischem Material (116) in Kontakt mit der vierten Schicht aus dielektrischem Material (117) ist; und
- die dritte Schicht aus dielektrischem Material, die vierte Schicht aus dielektrischem Material und die metallische Schicht eine zweite dielektrisch-dielektrisch-metallische Doppelgrenzschicht bilden, die eine zweite dielektrisch-dielektrische Grenzschicht und eine zweite dielektrisch-metallische Grenzschicht aufweist, die in dem mindestens einen ersten Kopplungsbereich gemäß dem ersten Kopplungsgitter ($C_1$) strukturiert ist.

4. Optische Sicherheitsvorrichtung nach einem der Ansprüche 2 oder 3, wobei die Metallschicht dünn genug ist, um die Kopplung von Oberflächenplasmonmoden zu ermöglichen, die von der ersten dielektrisch-metallischen Grenzschicht und der zweiten dielektrisch-metallischen Grenzschicht auf beiden Seiten der Metallschicht (115) unterstützt werden, was zu einem resonanten Transmissionseffekt führt.

5. Optische Sicherheitsvorrichtung gemäß einem der vorhergehenden Ansprüche, wobei das mindestens eine erste Kopplungsgitter asymmetrisch ist.

6. Optische Sicherheitsvorrichtung nach einem der vorhergehenden Ansprüche, wobei die erste Periode und die zweite Periode des mindestens einen ersten Kopplungsgitters unterschiedlich sind.

7. Optische Sicherheitsvorrichtung nach einem der vorhergehenden Ansprüche, wobei die mindestens eine erste dielektrisch-dielektrisch-metallische Doppelgrenzschicht strukturiert ist, um mindestens einen zweiten Bereich zu bilden, der eine andere Struktur als das erste Kopplungsgitter aufweist, wobei sich die mindestens eine erste Doppelgrenzschicht kontinuierlich über die gesamte Anordnung der Bereiche erstreckt.

8. Optische Sicherheitsvorrichtung gemäß Anspruch 7, wobei die Struktur des mindestens einen zweiten Bereichs ($Z_2$) ein zweites Kopplungsgitter ($C_2$) aufweist, das sich von dem ersten Kopplungsgitter unterscheidet.

9. Optische Sicherheitsvorrichtung nach einem der Ansprüche 7 oder 8, wobei die optische Sicherheitsvorrichtung bei Reflexion entlang der ersten Beobachtungsfläche und bei einem vorgegebenen Beobachtungswinkel einen ersten Farbeffekt mit einem ersten Tönungswinkel in dem ersten Kopplungsbereich und einen zweiten Farbeffekt mit einem zweiten Tönungswinkel in dem zweiten Bereich aufweist, wobei sich der zweite Tönungswinkel um mindestens 20° von dem ersten Tönungswinkel unterscheidet.

10. Optische Sicherheitsvorrichtung nach einem der vorhergehenden Ansprüche, wobei die mindestens eine erste dielektrisch-dielektrisch-metallische Doppelgrenzschicht in mindestens einem Bereich (Z3), der an den ersten Kopplungsbereich angrenzt, nicht strukturiert ist, wobei sich die mindestens eine erste Doppelgrenzschicht kontinuierlich über die gesamte Anordnung der Bereiche erstreckt.

11. Optische Sicherheitsvorrichtung nach einem der vorhergehenden Ansprüche, wobei die mindestens eine erste dielektrisch-dielektrisch-metallische Doppelgrenzschicht strukturiert ist, um eine Vielzahl von zusammenhängenden Bereichen einschließlich des ersten Kopplungsbereichs zu bilden, wobei sich die mindestens eine erste Doppelgrenzschicht kontinuierlich über die gesamte Anordnung der Bereiche erstreckt.

12. Optische Sicherheitsvorrichtung gemäß Anspruch 11, wobei die Anordnung der mehreren Bereiche ein erkennbares Muster bildet.

13. Optische Sicherheitsvorrichtung nach einem der vorhergehenden Ansprüche, wobei die mindestens eine erste dielektrisch-dielektrisch-metallische Doppelgrenzschicht strukturiert ist, um in dem mindestens einen ersten Kupplungsbereich eine erste diffraktive Struktur zu bilden, die durch das erste Kopplungsgitter ($C_1$) moduliert wird.

14. Optisches Sicherheitselement zum Sichern eines Gegenstands, beispielsweise eines Wertdokuments, aufweisend mindestens eine optische Sicherheitsvorrichtung nach einem der vorhergehenden Ansprüche.

15. Gesicherter Gegenstand, beispielsweise gesichertes Wertdokument, umfassend ein Substrat (91) und ein optisches Sicherheitselement (92) gemäß Anspruch 14 oder eine optische Sicherheitsvorrichtung gemäß einem der Ansprüche 1 bis 13, die auf dem Substrat aufgebracht ist.

16. Gesicherter Gegenstand nach Anspruch 15, wobei das Substrat eine rechteckige Form mit zwei senkrecht zueinander stehenden Achsen aufweist, wobei die Achsen nicht kollinear zu den Richtungen des mindestens einen ersten Kopplungsgitters der optischen Sicherheitsvorrichtung sind.

17. Gesicherter Gegenstand nach Anspruch 15, wobei das Substrat eine rechteckige Form mit zwei senkrechten Achsen aufweist, wobei die Achsen kollinear zu den Richtungen des mindestens einen ersten Kopplungsgitters der optischen Sicherheitsvorrichtung sind.

18. Verfahren zur Herstellung einer optischen Sicherheitsvorrichtung gemäß einem der Ansprüche 1 bis 13, aufweisend:

- Bilden der ersten Schicht (113) aus dielektrischem Material;
- Aufbringen der zweiten Schicht (114) aus dielektrischem Material auf die erste Schicht aus dielektrischem Material;
- Abscheiden der Metallschicht (115) auf der zweiten Schicht aus dielektrischem Material, um die erste dielektrisch-dielektrisch-metallische Doppelgrenzschicht zu bilden, wobei die erste dielektrisch-dielektrisch-metallische Doppelgrenzschicht so strukturiert ist, dass sie in dem mindestens einen ersten Kupplungsbereich das erste Kopplungsgitter ($C_1$) bildet.

19. Verfahren zur Authentifizierung einer optischen Sicherheitsvorrichtung gemäß einem der Ansprüche 1 bis 13, aufweisend:

- einen Schritt zum Beleuchten der optischen Sicherheitsvorrichtung mit natürlichem Licht und dem Beobachten einer Farbänderung des Farbeffekts in Abhängigkeit von der Polarisationsrichtung durch einen linearen Polarisator; oder
- einen Schritt, bei dem die optische Sicherheitsvorrichtung mit linear polarisiertem Licht beleuchtet wird und eine Farbänderung des Farbeffekts in Abhängigkeit von der Polarisationsrichtung beobachtet wird.

**Claims**

1. A plasmonic-effect optical security component (101), said component being able to be inspected with the naked eye, in reflection, via at least a first observation face ($100_A$), and comprising:

- at least one first transparent layer (113) of dielectric material, having a first refractive index ($n_1$),
- at least one second layer (114) of dielectric material, transparent, having a second refractive index, and said second layer of dielectric material making contact with said first layer of dielectric material;
- a metal layer (115) making contact with said at least one second layer of dielectric material; wherein:
- said first layer of dielectric material, said second layer of dielectric material and said metal layer form a first dielectric-dielectric-metal double interface (I) that comprises a first dielectric-dielectric interface and a first dielectric-metal interface, and that is structured to form, in at least one first coupling region ($Z_1$), a first two-dimensional coupling grating ($C_1$), with a first direction (X) and a second direction (Y), having a first period ($p_x$) comprised between 150 nm and 350 nm in the first direction and a second period ($p_y$) comprised between 150 nm and 350 nm in the second direction,
- said first coupling grating ($C_1$) is determined so as to generate a first plasmon-resonance effect at said at least one first dielectric-metal interface in a first resonance spectral band, wherein the optical security component is **characterized in that**:
- the thickness of the at least one second layer of dielectric material is comprised between 20 nm and 150 nm,
- the difference between the second refractive index and the first refractive index is larger than or equal to 0.5, and **in that**
- the thickness of said at least one second layer of dielectric material is determined so as to generate, by means of said first coupling grating ($C_1$), a hybrid plasmon-resonance effect, in a second resonance spectral band different from said first spectral band.

2. The optical security component as claimed in claim 1, further comprising a third transparent layer (116) of dielectric material making contact with said metal layer (115) so as to form a second dielectric-metal interface, said second dielectric-metal interface being structured, in said at least one first coupling region, as said first coupling grating.

3. The optical security component as claimed in claim 1, further comprising a third transparent layer (116) of dielectric material having a third refractive index ($n_3$), and a fourth transparent layer (117) of dielectric material, with a thickness comprised between 20 nm and 150 nm, having a fourth refractive index ($n_4$), the difference between the fourth refractive index and the third refractive index being larger than or equal to 0.5, and wherein:

- said fourth layer (117) of dielectric material makes contact with the metal layer (115) and said third layer (116) of dielectric material makes contact with said fourth layer (117) of dielectric material; and
- said third layer of dielectric material, said fourth layer of dielectric material and said metal layer form a second dielectric-dielectric-metal double interface that comprises a second dielectric-dielectric interface and a second dielectric-metal interface, and that is structured, in said at least one first coupling region, as the first coupling grating ($C_1$).

4. The optical security component as claimed in either one of claims 2 and 3, wherein the metal layer is sufficiently thin to allow surface-plasmon modes supported by said first dielectric-metal interface and said second dielectric-metal interface on either side of the metal layer (115) to be coupled to, resulting in a resonant-transmission effect.

5. The optical security component as claimed in any one of the preceding claims, wherein said at least one first coupling grating is dissymmetric.

6. The optical security component as claimed in any one of the preceding claims, wherein said first period and said second period of said at least one first coupling grating are different.

7. The optical security component as claimed in any one of the preceding claims, wherein said at least one first dielectric-dielectric-metal double interface is structured to form, in at least one second zone, a structure different from said first coupling grating, said at least one first double interface remaining continuous through all said regions.

8. The optical security component as claimed in claim 7, wherein said structure of said at least one second region ($Z_2$) comprises a second coupling grating ($C_2$) that is different from the first coupling grating.

9. The optical security component as claimed in either one of claims 7 and 8, wherein the optical security component has, in reflection from said first observation face and at a given observation angle, a first color effect with a first hue angle in the first coupling region, and a second color effect with a second hue angle in said second region, the second hue angle being different from the first hue angle by a value at least equal to 20°.

10. The optical security component as claimed in any one of the preceding claims, wherein said at least one first dielectric-dielectric-metal double interface is not structured in at least one region ($Z_3$) contiguous with said first coupling region, said at least one first double interface remaining continuous through all of said regions.

11. The optical security component as claimed in any one of the preceding claims, wherein said at least one first dielectric-dielectric-metal double interface is structured to form a plurality of contiguous regions, including said first coupling region, said at least one first double interface remaining continuous through all of said regions.

12. The optical security component as claimed in claim 11, wherein all of said regions of the plurality of regions form a recognizable pattern.

13. The optical security component as claimed in any one of the preceding claims, wherein said at least one first dielectric-dielectric-metal double interface is structured to form, in said at least one first coupling region, a diffractive first structure modulated by said first coupling grating ($C_1$).

14. An optical security element intended to secure an object, for example a document of value, comprising at least one optical security component as claimed in any one of the preceding claims.

15. A security object, for example a security document of value, comprising a substrate (91) and, deposited on said substrate, an optical security element (92) as claimed in claim 14 or an optical security component as claimed in any one of claims 1 to 13.

16. The security object as claimed in claim 15, wherein the substrate has a rectangular shape with two perpendicular axes, the axes being non-collinear with the directions of said at least one first coupling grating of the optical security component.

17. The security object as claimed in claim 15, wherein the substrate has a rectangular shape with two perpendicular axes, the axes being collinear with the directions of said at least one first coupling grating of the optical security component.

18. A method for manufacturing an optical security component as claimed in any one of claims 1 to 13, comprising:

   - forming said first layer (113) of dielectric material;
   - depositing, on said first layer of dielectric material, said second layer (114) of dielectric material;
   - depositing, on said second layer of dielectric material, said metal layer (115), so as to form said first dielectric-dielectric-metal double interface, said first dielectric-dielectric-metal double interface being structured to form, in said at least first coupling region, said first coupling grating (Ci).

**19.** A method for authenticating an optical security component as claimed in any one of claims 1 to 13, comprising:

- a step of illuminating said optical security component with natural light and observing, through a linear polarizer, a change in the color of the color effect as a function of polarization direction; or
- a step of illuminating said optical security component with linearly polarized light and observing a change in the color of the color effect as a function of polarization direction.

FIG.1A

FIG.1B

FIG.2A

FIG.2B

FIG.2C

FIG.3A

FIG.3B

FIG.3C

FIG.4A

FIG.4B

FIG.4C

FIG.4D

FIG.5A

FIG.5B

FIG.6A

FIG.6B

FIG.6C

FIG.6D

FIG.7A

FIG.7B

FIG.8

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2771724 A
- EP 2695006 A
- EP 3099513 A
- DE 102007061979 A1
- US 4856857 A
- EP 2567270 A
- EP 3129238 A
- FR 3066954
- FR 3051565
- EP 2836371 A